(19)

Europäisches Patentamt

European Patent Office

Office européen des brevets

(11) **EP 3 848 856 A1**

(12) **EUROPEAN PATENT APPLICATION**
published in accordance with Art. 153(4) EPC

(43) Date of publication:
**14.07.2021 Bulletin 2021/28**

(21) Application number: **19857335.4**

(22) Date of filing: **12.08.2019**

(51) Int Cl.:
**G06N 3/04** (2006.01)

(86) International application number:
**PCT/CN2019/100212**

(87) International publication number:
**WO 2020/048292 (12.03.2020 Gazette 2020/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **04.09.2018 CN 201811027795**

(71) Applicant: **TENCENT TECHNOLOGY (SHENZHEN) COMPANY LIMITED**
**Shenzhen, Guangdong 518057 (CN)**

(72) Inventors:
• **TU, Zhaopeng**
  **Shenzhen, GUANGDONG 518057 (CN)**
• **YANG, Baosong**
  **Shenzhen, GUANGDONG 518057 (CN)**
• **ZHANG, Tong**
  **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **METHOD AND APPARATUS FOR GENERATING NETWORK REPRESENTATION OF NEURAL NETWORK, STORAGE MEDIUM, AND DEVICE**

(57)   The present application relates to a method and apparatus for generating network representation of a neural network, a storage medium, and a device. The method comprises: obtaining a source vector representation sequence corresponding to an input sequence; performing linear conversion on the source vector representation sequence to separately obtain a request vector sequence, a key vector sequence, and a value vector sequence corresponding to the source vector representation sequence; calculating the logic similarity between the request vector sequence and the key vector sequence; constructing a local enhanced matrix according to the request vector sequence; performing non-linear conversion on the basis of the logic similarity and the local enhanced matrix to obtain a locally enhanced attention weight distribution corresponding to elements; and fusing value vectors in the value vector sequence according to the attention weight distribution to obtain a network representation sequence corresponding to the input sequence. According to the network representation sequence generated in the solution provided by the present application, not only local information can be enhanced, but also the connection between long-long elements in the input sequence can be preserved.

```
                                                      ┌─ S202
┌──────────────────────────────────────────────────┐
│ Obtain a source-side vector representation         │
│ sequence corresponding to an input sequence        │
└──────────────────────────────────────────────────┘
                        │
                        ▼                             ┌─ S204
┌──────────────────────────────────────────────────┐
│ Perform a linear transformation on the source-side │
│ vector representation sequence, to respectively     │
│ obtain a request vector sequence, a key vector      │
│ sequence and a value vector sequence corresponding  │
│ to the source-side vector representation sequence    │
└──────────────────────────────────────────────────┘
                        │
                        ▼                             ┌─ S206
┌──────────────────────────────────────────────────┐
│ Calculate a logical similarity degree between the  │
│ request vector sequence and the key vector sequence │
└──────────────────────────────────────────────────┘
                        │
                        ▼                             ┌─ S208
┌──────────────────────────────────────────────────┐
│ Construct a locally strengthened matrix according   │
│ to the request vector sequence                      │
└──────────────────────────────────────────────────┘
                        │
                        ▼                             ┌─ S210
┌──────────────────────────────────────────────────┐
│ Perform a nonlinear transformation based on the     │
│ logical similarity degree and the locally           │
│ strengthened matrix, to obtain locally strengthened │
│ attention weight distributions respectively         │
│ corresponding to elements                           │
└──────────────────────────────────────────────────┘
                        │
                        ▼                             ┌─ S212
┌──────────────────────────────────────────────────┐
│ Fuse value vectors in the value vector sequence     │
│ according to the attention weight distributions, to │
│ obtain a network representation sequence            │
│ corresponding to the input sequence                 │
└──────────────────────────────────────────────────┘
```

FIG. 2

EP 3 848 856 A1

**Description**

This application claims priority to Chinese Patent Application No. 201811027795.X, entitled "METHOD AND APPARATUS FOR GENERATING NETWORK REPRESENTATION OF NEURAL NETWORK, STORAGE MEDIUM, AND DEVICE" and filed on September 4, 2018, which is incorporated herein by reference in its entirety.

**FIELD OF THE TECHNOLOGY**

The present disclosure relates to the field of computer technologies, and in particular to a network representation generating method and apparatus for a neural network, a storage medium, and a device.

**BACKGROUND OF THE DISCLOSURE**

An attention mechanism is a method of establishing a model for a dependence between hidden states of an encoder and a decoder in a neural network. The attention mechanism is widely applied to tasks of natural language processing (NLP) based on deep learning.

A self-attenuation network (SAN) is a neural network model based on a self-attention mechanism, which belongs to one type of attention models. By the SAN, an attention weight can be calculated for each element pair in an input sequence, so that a long-distance dependence can be captured, and network representations corresponding to elements are not affected by distances between the elements. However, in the SAN, all the elements in the input sequence are fully considered. In this case, attention weights between each element and all the elements are required to be calculated, which disperses a distribution of the weights to some extent, and further weakens an association between the elements.

**SUMMARY**

In view of this, it is desired to provide a network representation generating method and apparatus for a neural network, a storage medium, and a device, to resolve the existing technical problem that an association between elements is weakened due to considering attention weights between each element and all the elements in a self-attention neural network.

In an aspect, a network representation generating method for a neural network is provided. The method is applied to a computer device. The method includes:

   obtaining a source-side vector representation sequence corresponding to an input sequence;

   performing a linear transformation on the source-side vector representation sequence, to respectively obtain a request vector sequence, a key vector sequence and a value vector sequence corresponding to the source-side vector representation sequence;

   calculating a logical similarity degree between the request vector sequence and the key vector sequence;

   constructing a locally strengthened matrix according to the request vector sequence;

   performing a nonlinear transformation based on the logical similarity degree and the locally strengthened matrix, to obtain locally strengthened attention weight distributions respectively corresponding to elements; and

   fusing value vectors in the value vector sequence according to the attention weight distributions, to obtain a network representation sequence corresponding to the input sequence.

In another aspect, a network representation generating apparatus for a neural network is provided. The apparatus includes: an obtaining module, a linear transformation module, a logical similarity degree calculation module, a locally strengthened matrix construction module, an attention weight distribution determining module and a fusion module, where

the obtaining module is configured to obtain a source-side vector representation sequence corresponding to an input sequence;

the linear transformation module is configured to perform a linear transformation on the source-side vector representation sequence, to respectively obtain a request vector sequence, a key vector sequence and a value vector sequence corresponding to the source-side vector representation sequence;

the logical similarity degree calculation module is configured to calculate a logical similarity degree between the request vector sequence and the key vector sequence;

the locally strengthened matrix construction module is configured to construct a locally strengthened matrix according to the request vector sequence;

the attention weight distribution determining module is configured to perform a nonlinear transformation based on the logical similarity degree and the locally strengthened matrix, to obtain locally strengthened attention weight distributions respectively corresponding to elements; and

the fusion module is configured to fuse value vectors in the value vector sequence according to the attention weight distributions, to obtain a network representation sequence corresponding to the input sequence.

In another aspect, a computer-readable storage medium is provided. The computer-readable storage medium stores a computer program. The computer program, when executed by a processor, causes the processor to perform the steps of the network representation generating method for a neural network described above.

In another aspect, a computer device is provided. The computer device includes a memory and a processor. The memory stores a computer program. The computer program, when executed by the processor, causes the processor to perform the steps of the network representation generating method for a neural network described above.

According to the network representation generating method and apparatus for a neural network, the storage medium, and the device, the locally strengthened matrix is constructed based on the request vector sequence corresponding to the input sequence, so that attention weights can be assigned in the locally strengthened range, to strengthen local information. By performing the linear transformation on the source-side vector representation sequence corresponding to the input sequence, the request vector sequence, the key vector sequence and the value vector sequence are obtained. The logical similarity degree is obtained according to the request vector sequence and the key vector sequence. The nonlinear transformation is performed based on the logical similarity degree and the locally strengthened matrix, to obtain the locally strengthened attention weight distributions, correcting original attention weights. A weighted sum is performed on the value vector sequence according to the locally strengthened attention weight distributions, so that a network representation sequence with the strengthened local information can be obtained. In the obtained network representation sequence, not only the local information can be strengthened, but also an association between elements in the input sequence far away from each other can be retained.

## BRIEF DESCRIPTION OF THE DRAWINGS

FIG. 1 is a diagram showing an application environment of a network representation generating method for a neural network according to an embodiment;

FIG. 2 is a schematic flowchart of a network representation generating method for a neural network according to an embodiment;

FIG. 3 is a schematic diagram showing a process of calculating a network representation sequence corresponding to an input sequence according to an embodiment;

FIG. 4 is a diagram showing a system architecture in which an SAN attention weight distribution is corrected by a Gaussian distribution according to an embodiment;

FIG. 5 is a schematic flowchart showing a process of constructing a locally strengthened matrix according to a request vector sequence according to an embodiment;

FIG. 6 is a schematic flowchart showing a process of determining a locally strengthened range according to a request vector sequence according to an embodiment;

FIG. 7 is a schematic flowchart showing a process of determining a locally strengthened range according to a request vector sequence and a key vector sequence according to an embodiment;

FIG. 8 is a schematic structural diagram of a stacked multi-head self-attention neural network having multiple layers according to an embodiment;

FIG. 9 is a schematic flowchart of a network representation generating method for a neural network according to an embodiment;

FIG. 10 is a structural block diagram of a network representation generating apparatus for a neural network according to an embodiment; and.

FIG. 11 is a structural block diagram of a computer device according to an embodiment.

**DESCRIPTION OF EMBODIMENTS**

To make the objectives, technical solutions, and advantages of the present disclosure clearer and more understandable, the present disclosure is further described in detail below with reference to the accompanying drawings and the embodiments. It should be understood that, the embodiments described herein are merely used for explaining the present disclosure, but are not intended to limit the present disclosure.

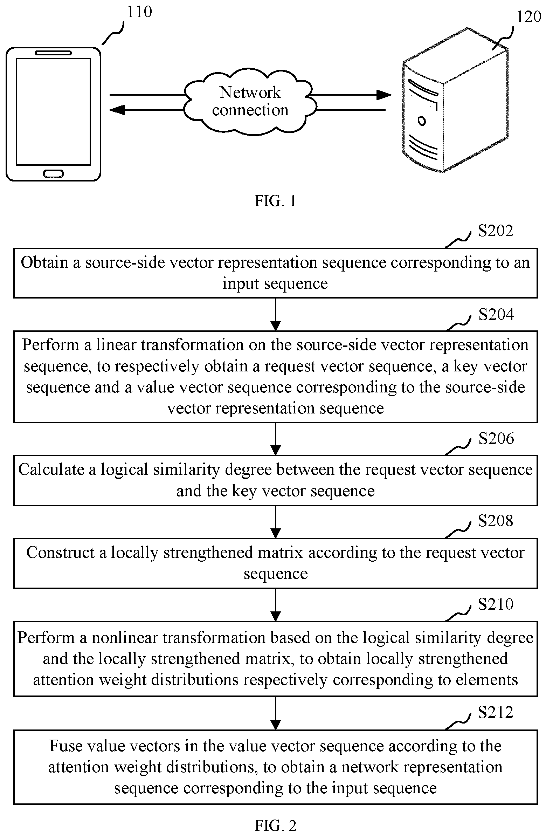

FIG. 1 is a diagram showing an application environment of a network representation generating method for a neural network according to an embodiment. Referring to FIG. 1, the network representation generating method for a neural network is applied to a network representation generating system for a neural network. The network representation generating system for a neural network includes a terminal 110 and a computer device 120. The terminal 110 and the computer device 120 are connected to each other through Bluetooth, a universal serial bus (USB) or a network. The terminal 110 may transmit a to-be-processed input sequence to the computer device 120 in real time or non-real time. The computer device 120 is used to receive the input sequence, and perform transformation on the input sequence to output a corresponding network representation sequence. The terminal 110 may be a desktop terminal or a mobile terminal. The mobile terminal may be at least one of a mobile phone, a tablet computer, a notebook computer, or the like. The computer device 120 may be an independent server or terminal, or may be a server cluster formed by multiple servers, or may be a cloud server providing basic cloud computing services such as a cloud server service, a cloud database service, a cloud storage service, and a CDN service.

It should be noted that, the foregoing application environment is merely an example. In some embodiments, the computer device 120 may directly obtain the input sequence without the terminal 110. For example, in a case that the computer device is implemented by a mobile phone, the mobile phone may directly obtain the input sequence (for example, a sequence formed by words in an instant text message), perform transformation on the input sequence by using a network representation generating apparatus for a neural network configured on the mobile phone, and output a network representation sequence corresponding to the input sequence.

As shown in FIG. 2, a network representation generating method for a neural network is provided according to an embodiment. In this embodiment, description is made mainly by using an example in which the method is applied to the computer device 120 in FIG. 1. Referring to FIG. 2, the network representation generating method for a neural network may include the following steps S202 to S212.

In S202, a source-side vector representation sequence corresponding to an input sequence is obtained.

The input sequence is a sequence to be transformed to obtain a corresponding network representation sequence. The input sequence includes a set of ordered elements. Taking an input sequence including $I$ elements as an example, the input sequence may be represented by $X = \{x_1, x_2, x_3, ... x_I\}$, where a length of the input sequence is indicated by $I$, and $I$ is a positive integer.

In a scenario that the input sequence is required to be translated, the input sequence may be a word sequence corresponding to a to-be-translated text, and elements in the input sequence are respectively words in the word sequence. If the to-be-translated text is a Chinese text, the word sequence may be a sequence formed by performing word segmentation on the to-be-translated text and arraying obtained words according to a word order. If the to-be-translated text is an English text, the word sequence is a sequence formed by arraying words according to a word order. For example, if the to-be-translated text is "Bush held a talk with Sharon", a corresponding input sequence $X$ is {Bush, held, a, talk, with, Sharon}.

The source-side vector representation sequence is a sequence formed by source-side vector representations of the elements in the input sequence. The vector representations in the source-side vector representation sequence are in a one-to-one correspondence with the elements in the input sequence. The source-side vector representation sequence may be represented by $Z = \{z_1, z_2, z_3, ... z_I\}$ .

The computer device may convert each element in the input sequence into a vector having a fixed length (i.e., perform word embedding). In an embodiment, the network representation generating method for a neural network is applied to a neural network model. In this case, the computer device may convert each element in the input sequence into a corresponding vector through a first layer of the neural network model. For example, the computer device converts an i-th element $x_i$ in the input sequence into a d-dimensional column vector, i.e., $z_i$. The computer device combines vectors corresponding to the elements in the input sequence, to obtain the source-side vector representation sequence corresponding to the input sequence, that is, a vector sequence formed by $I$ d-dimensional column vectors, where d is a positive integer. The computer device may also receive a source-side vector representation sequence corresponding to an input sequence transmitted by another device. $z_i$ and column vectors mentioned below may be row vectors. For ease of describing the calculation process, the description herein is given by means of the column vectors.

In S204, a linear transformation is performed on the source-side vector representation sequence, to respectively obtain a request vector sequence, a key vector sequence and a value vector sequence corresponding to the source-side vector representation sequence.

The linear transformation may be used to map a vector in a vector space to another vector space. The vector space is a set formed by multiple vectors having the same dimension. In an embodiment, the computer device may perform the linear transformation on the source-side vector representation sequence by three different learnable parameter matrices, so that the source-side vector representation sequence is mapped to three different vector spaces, to respectively obtain the request vector sequence, the key vector sequence and the value vector sequence corresponding to the source-side vector representation sequence.

In an embodiment, the network representation generating method for a neural network is applied to a model based on a self-attention neural network (SAN). In this case, each of the request vector sequence, the key vector sequence and the value vector sequence is obtained by performing the linear transformation on the source-side vector representation sequence corresponding to the input sequence at a source side. In another embodiment, the network representation generating method for a neural network is applied to a neural network model including an Encoder-Decoder structure. In this case, the key vector sequence and the value vector sequence are obtained by encoding the source-side vector representation sequence corresponding to the input sequence by an encoder. That is, the key vector sequence and the value vector sequence are outputs of the encoder. The request vector sequence is an input of a decoder, for example, may be a target-side vector representation sequence, where the target-side vector representation sequence may be formed by vector representations corresponding to elements in an output sequence outputted by the decoder.

In an embodiment, the computer device may perform the linear transformation on the source-side vector representation sequence $Z$ by three different learnable parameter matrices $W^Q$, $W^K$, and $W^V$, to obtain a request vector sequence $Q$, a key vector sequence $K$ and a value vector sequence $V$ according to the following formulas:

$$Q = Z \cdot W^Q$$

$$K = Z \cdot W^K$$

$$V = Z \cdot W^V$$

where the input sequence $X = \{x_1, x_2, x_3,..., x_l\}$ includes $l$ elements, and each element in the source-side vector representation sequence $Z = \{z_1, z_2, z_3,..., z_l\}$ is a d-dimensional column vector, that is, $Z$ is a vector sequence formed by $l$ d-dimensional column vectors, which may be denoted as an $l \times d$ matrix. Further, the learnable parameter matrices $W^Q$, $W^K$, and $W^V$ each are a $d \times d$ matrix. The request vector sequence $Q$, the key vector sequence $K$, and the value vector sequence $V$ each are an $l \times d$ matrix.

In S206, a logical similarity between the request vector sequence and the key vector sequence is calculated.

The logical similarity degree is used for measuring a similarity between one element in the input sequence and another element in the input sequence. In the process of generating a network representation corresponding to the element, a corresponding attention weight may be assigned, based on the similarity, to a value vector corresponding to the another element in the input sequence. In this way, the network representation corresponding to the element is obtained in the case of taking the association between the element and the another element into consideration, so that the generated network representation can more accurately present features of the element and contain more abundant information.

In an embodiment, the network representation generating method for a neural network is applied to a neural network model including an Encoder-Decoder structure. In this case, the request vector sequence is a target-side vector representation sequence, and the calculated logical similarity degree is used for indicating a similarity between the target-side vector representation sequence and the key vector sequence corresponding to the input sequence. A corresponding attention weight is assigned, based on the similarity, to the value vector sequence corresponding to the input sequence, so that the network representation of each element outputted by the source side is obtained in the case of taking the effect of the target-side vector representation sequence inputted by a target side into consideration.

In an embodiment, the computer device may calculate a logical similarity degree matrix $E$ between the request vector sequence $Q$ and the key vector sequence $K$ according to a cosine similarity formula, that is,

$$E = \frac{Q \cdot K^T}{\sqrt{d}}$$ formula (1)

where $K^T$ represents a transposed matrix of the key vector sequence $K$, d denotes a dimension of a source-side vector representation $Z_i$ into which each element $x_i$ in the input sequence is converted, d also denotes a dimension of the network representation corresponding to $x_i$, and also a dimension of a network hidden state vector. In the foregoing

$$\sqrt{d}$$

formula, by dividing by $\quad$, an inner product is decreased, and a calculation speed is reduced.

The process of calculating the logical similarity degree matrix $E$ is described in the following.

$Q = (q_1, q_2, ..., q_i..., q_I)$ and $K = (k_1, k_2, ..., k_i, ..., k_I)$. where $q_i$ and $k_i$ are d-dimensional column vectors and are respectively a request vector and a key vector corresponding to the source-side vector representation $z_i$. In the logical similarity degree matrix $E = (e_1, e2, ..., e_i, ..., e_I)$, each element of $e_i$ represents a logical similarity degree between the request vector $q_i$ corresponding to the source-side vector representation $z_i$ and one of key vectors $k_1, k_2, ..., k_i, ..., k_I$ respectively corresponding to all elements in the input sequence, where $e_i$ is an element in an i-th column of the $E$, and $e_i$ is an $I$ - dimensional column vector and is calculated according to a formula

$$e_i = \frac{1}{\sqrt{d}}\left(q_i \cdot k_1^T, q_i \cdot k_2^T, q_i \cdot k_3^T, ..., q_i \cdot k_I^T\right)$$

. In essence, $e_i$ implies an association between two elements in each of $I$ element pairs formed by the i-th element $x_i$ and all elements $x_1, x_2, ..., x_i, ..., x_I$ in the input sequence. The logical similarity degree matrix $E$ is an $I \times I$ matrix. The logical similarity degree matrix $E$ is as follows:

$$E = \frac{1}{\sqrt{d}}\begin{Bmatrix} q_1 \cdot k_1^T & q_2 \cdot k_1^T & q_3 \cdot k_1^T & ... & q_I \cdot k_1^T \\ q_1 \cdot k_2^T & q_2 \cdot k_2^T & q_3 \cdot k_2^T & ... & q_I \cdot k_2^T \\ q_1 \cdot k_3^T & q_2 \cdot k_3^T & q_3 \cdot k_3^T & ... & q_I \cdot k_3^T \\ ... & ... & ... & ... & ... \\ q_1 \cdot k_I^T & q_2 \cdot k_I^T & q_3 \cdot k_I^T & ... & q_I \cdot k_I^T \end{Bmatrix}$$

In S208, a locally strengthened matrix is constructed according to the request vector sequence.

Each element of a column vector in the locally strengthened matrix represents an association degree between two elements in the input sequence. In the process of generating the network representation corresponding to each element in the input sequence, the effect of another element in the input sequence having a large association degree with the current element on the network representation may be strengthened by the locally strengthened matrix, and the effect of an element having a small association degree with the current element on the network representation is relatively weakened. By means of the locally strengthened matrix, a considered scope is limited to local elements rather than all the elements in the input sequence when considering the effect of another element on the network representation of the current element. In this way, in the attention weight assignment, the attention weights are biased to be assigned in the local elements. A magnitude of the attention weight assigned to a value vector corresponding to an element among the local elements is related to an association degree between the element and the current element. That is, a large attention weight is assigned to a value vector corresponding to an element having a large association degree with the current element.

The description is given below by taking the input sequence "Bush held a talk with Sharon" as an example. In the SAN model, in a process of outputting a network representation corresponding to an element "Bush", value vectors respectively corresponding to all elements "Bush", "held", "a", "talk", "with", and "Sharon" in the input sequence are completely considered, and the value vectors respectively corresponding to all the elements are assigned with corresponding attention weights, which disperses a distribution of the attention weights to some extent, and further weakens an association between the element "Bush" and an adjacent element.

In the network representation generating method for a neural network in this embodiment, in a process of outputting the network representation corresponding to the element "Bush", the attention weights may be assigned in a locally strengthened range. In the process of outputting the network representation corresponding to the element "Bush", if a large association exists between the element "Bush" and the element "hold", a relatively high attention weight is assigned to a value vector corresponding to the element "hold". Similar to the "held", "a talk" among the local elements that falls within the locally strengthened range corresponding to the element "Bush" is also noted and is assigned with a relatively high attention weight. In this way, information (value vectors) corresponding to words in the phrase "held a talk" is captured and is associated with the element "Bush", so that the outputted network representation of the element "Bush" can not only indicate local information, but also retain a dependence with a farther element.

Therefore, in the process of generating the network representation corresponding to each element, the computer device is required to determine a locally strengthened range corresponding to the current element, so that the assignment of the attention weights corresponding to the current element is limited in the locally strengthened range.

In an embodiment, the locally strengthened range may be determined according to two variables including a center point of the locally strengthened range and a window size of the locally strengthened range. The center point refers to a position of an element assigned with the highest attention weight in the process of generating of the network representation of the current element in the input sequence. The window size refers to a length of the locally strengthened range, which determines how many elements are centralizedly assigned with the attention weights. In this case, the locally strengthened range is defined by elements falling in a range with the center point as a center and with the window size as a span. Since a locally strengthened range corresponding to each element is related to the element itself, which corresponds to the element and is not fixed in a specific range, abundant context information may be flexibly captured by means of the generated network representation of the element.

In an embodiment, the computer device may determine the locally strengthened range corresponding to each element according to the center point and the window size. The process may be performed by: determining the center point as a mean of a Gaussian distribution and determining the window size as a variance of the Gaussian distribution; and determining the locally strengthened range according to the Gaussian distribution determined based on the mean and the variance. The computer device may calculate an association degree between two elements based on the determined locally strengthened range, to obtain the locally strengthened matrix. The association degree between two elements is calculated according to the following formula:

$$G_{ij} = -\frac{2(j - P_i)^2}{D_i^2} \qquad \text{formula (2)}$$

where $G_{ij}$ represents an association degree between a j-th element and a center point $P_i$ corresponding to an i-th element in the input sequence, and $G_{ij}$ is a value of a j-th element of an i-th column vector in a locally strengthened matrix $G$; $P_i$ represents a center point of a locally strengthened range corresponding to the i-th element; and $D_i$ represents a window size of the locally strengthened range corresponding to the i-th element.

It can be seen from the formula (2) that, the locally strengthened matrix $G$ is an $I \times I$ matrix, including $I$ column vectors, where a dimension of each column vector is $I$. A value of each element in the i-th column vector of the locally strengthened matrix $G$ is determined based on the locally strengthened range corresponding to the i-th element in the input sequence. The formula (2) is a function that is symmetric about the center point $P_i$. The numerator in the formula represents a distance between the j-th element and the center point $P_i$ corresponding to the i-th element in the input sequence. A close distance corresponds to a large $G_{ij}$, indicating a large association degree between the j-th element and the i-th element. In addition, a far distance corresponds to a small $G_{ij}$, indicating a small association degree between the j-th element and the i-th element. That is, in the process of generating a network representation corresponding to the i-th element, the attention weights are centralizedly assigned among elements close to the center point $P_i$

It should be noted that, calculating the $G_{ij}$ according to the formula (2) modified based on the Gaussian distribution is merely an example. In some embodiments, after the center point and the window size corresponding to the locally strengthened range are determined, the center point may be used as a mean, the window size may be used as a variance, and a value of $G_{ij}$ is calculated through another distribution having the mean and the variance, such as a Poisson distribution or a binomial distribution, to obtain the locally strengthened matrix $G$.

In S210, a nonlinear transformation is performed based on the logical similarity degree and the locally strengthened matrix, to obtain locally strengthened attention weight distributions respectively corresponding to elements.

The logical similarity degree indicates a similarity between two elements in each element pair in the input sequence, and the locally strengthened matrix indicates an association between the two elements in each element pair in the input sequence. The locally strengthened attention weight distribution may be calculated by a combination of the logical similarity degree and the locally strengthened matrix.

In an embodiment, the performing a nonlinear transformation based on the logical similarity degree and the locally strengthened matrix, to obtain locally strengthened attention weight distributions respectively corresponding to the elements may include: correcting the logical similarity degree according to the locally strengthened matrix, to obtain a locally strengthened logical similarity degree; and performing normalization on the locally strengthened logical similarity degree, to obtain the locally strengthened attention weight distributions respectively corresponding to the elements.

After obtaining the logical similarity degree and the association degree between the two elements in each element pair in the input sequence, the computer device may correct the logical similarity degree through the association degree, to obtain the locally strengthened logical similarity degree. In an embodiment, the logical similarity degree matrix $E$ including logical similarity degrees respectively corresponding to all element pairs may be added to the locally strengthened matrix $G$ including association degrees respectively corresponding to all the element pairs, to correct (which is also referred to as offset) the logical similarity degree matrix, and normalization is performed on logical similarity degree vectors in the corrected logical similarity degree matrix, to obtain the locally strengthened attention weight distribution.

The normalization on the logical similarity degree vectors in the corrected logical similarity degree matrix is performed in a unit of a column vector $e_i'$. That is, a value of each element in the column vector $e_i'$ is in a range of (0,1), and a sum of all elements in the column vector $e_i'$ is 1. By normalization on the column vector $e_i'$, a maximum value in the column vector can be highlighted, and other components far lower than the maximum value can be suppressed, and thus the locally strengthened attention weight distribution corresponding to the i-th element in the input sequence can be obtained.

In an embodiment, the locally strengthened attention weight distribution A may be calculated according to the following formula:

$$A = \mathrm{softmax}\ (E + G)$$

where the softmax function is a normalization function, and A indicates a matrix including an attention weight distribution corresponding to each element in the input sequence. A = $\{\alpha_1, \alpha_2, \alpha_3, ..., \alpha_l\}$ , A includes $l$ I-dimensional column vectors, and an i-th element $\alpha_i$ in A represents an attention weight distribution corresponding to an i-th element $x_i$ in the input sequence.

In S212, value vectors in the value vector sequence are fused according to the attention weight distributions, to obtain a network representation sequence corresponding to the input sequence.

The network representation sequence is a sequence formed by multiple network representations (vector representations). In this embodiment, the input sequence may be inputted to the neural network model, and the network representation sequence corresponding to the input sequence may be outputted through linear transformation or nonlinear transformation on a model parameter in a hidden layer of the neural network model.

In the process of outputting a network representation corresponding to the current element $x_i$ , the computer device obtains an attention weight distribution $\alpha_i$ corresponding to the element from the locally strengthened attention weight distribution matrix, and calculates a weighted sum of the value vectors in the value vector sequence with each element in the attention weight distribution $\alpha_i$ corresponding to the element as a weight coefficient, to obtain a network representation $o_i$ corresponding to the current element $x_i$ . In this case, a network representation sequence $O$ corresponding to the input sequence is formed by multiple network representations, for example, $O = \{o_1, o_2, o_3, ..., o_l\}$

An i-th element $O_i$ in the network representation sequence $O$ corresponding to the input sequence may be calculated according to the following formula:

$$o_i = \sum_{j=1}^{I} \alpha_{ij} v_j$$

Since $\alpha_{ij}$ is a constant and $v_j$ is a d-dimensional column vector, $O_i$ is also a d-dimensional column vector. That is, in a case that the attention weight distribution corresponding to the i-th element $x_i$ in the input sequence is expressed as $\alpha_i = \{\alpha_{i1}, \alpha_{i2}, \alpha_{i3}, ..., \alpha_{il}\}$, and a K value vector sequence corresponding to the input sequence is expressed as $V = \{v_1, v_2, v_3, ..., v_l\}$, the network representation $O_i$ corresponding to $x_i$ may be calculated according to the following formula:

$$o_i = \alpha_{i1} v_1 + \alpha_{i2} v_2 + \alpha_{i3} v_3 + ... + \alpha_{il} v_I$$

Since the attention weight distribution corresponding to the current element is a locally strengthened attention weight distribution obtained by correcting an original logical similarity, not the value vectors corresponding to all the elements in the input sequence are completely considered in the weighted sum process, but value vectors corresponding to elements falling in the locally strengthened range are emphatically considered. In this way, the outputted network representation of the current element contains local information associated with the current element.

It should be noted that, the term "element" used in the present disclosure may be used for describing a basic component unit of a vector (including a column vector or a matrix vector) in this specification. For example, "elements in an input sequence" refer to inputs in the input sequence, and "elements in a matrix" refer to column vectors that constitute the matrix, and "elements in a column vector" refer to values in the column vector. That is, the "element" refers to a basic component unit that constitutes a sequence, a vector, or a matrix.

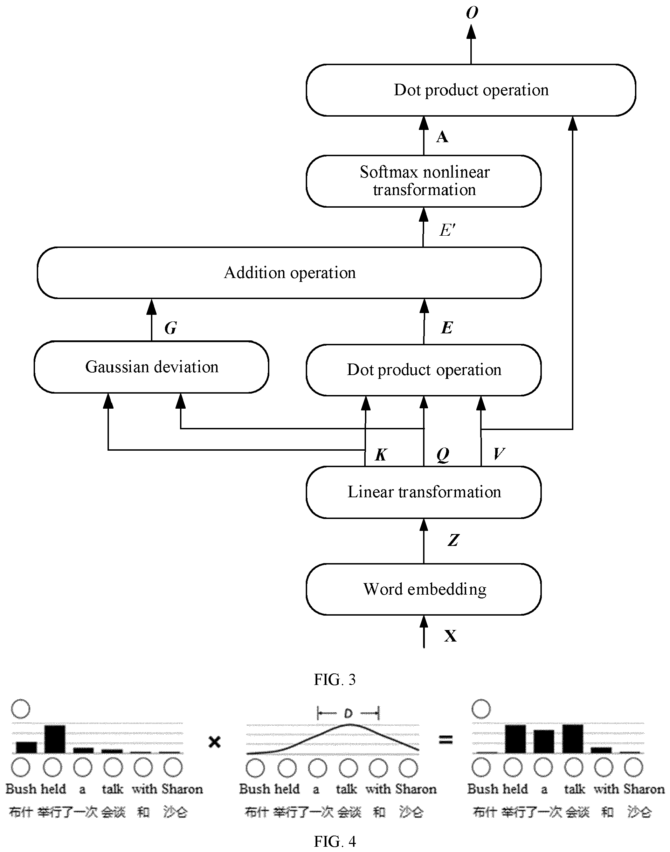

FIG. 3 is a schematic diagram showing a process of calculating a network representation sequence corresponding to an input sequence according to an embodiment. Referring to FIG. 3, after a vectorized representation $Z$ corresponding to an input sequence $X$ is obtained, $Z$ is linearly transformed into a request vector sequence $Q$, a key vector sequence $K$ and a value vector sequence $V$ through three different learnable parameter matrices. Next, a logical similarity degree between each pair of key values is calculated through a dot product operation, to obtain a logical similarity degree matrix $E$. Next, a locally strengthened matrix $G$ is constructed according to $Q$ or $K$, and $E$ is corrected by $G$, to obtain a locally strengthened logical similarity degree matrix $E'$. Next, normalization is performed on $E'$ by using the softmax function, to obtain a locally strengthened attention weight distribution matrix A. Finally, a dot product operation is performed on A and the value vector sequence $V$, to output a network representation sequence $O$.

FIG. 4 is a diagram showing a system architecture in which an SAN attention weight distribution is corrected by a Gaussian distribution according to an embodiment. The description is given below by taking the input sequence being "Bush held a talk with Sharon" and the current element being "Bush" as an example. On the left side of FIG. 4, a basic model is constructed by an original SAN, to obtain a logical similarity degree between each pair of elements (formed by two elements in the input sequence), and an attention weight distribution corresponding to "Bush" is calculated based on the logical similarity degree, which considers all words. The word "held" is assigned with the highest attention weight (where a column height represents a magnitude of an attention weight), and remaining words are assigned with lower attention weights. Referring to the middle of FIG. 4, a position of a center point of a locally strengthened range corresponding to the current element "Bush" calculated by using the Gaussian distribution is approximately equal to 4, which corresponds to the word "talk" in the input sequence, and a window size of the locally strengthened range is approximately equal to 3. That is, the locally strengthened range corresponding to the current element "Bush" includes positions corresponding to three words centered on the word "talk". A locally strengthened matrix is calculated based on the determined locally strengthened range, and the logical similarity degree obtained from the left side of FIG. 4 is corrected by using the locally strengthened matrix, so that the corrected attention weights are centralizedly assigned among the three words, and the word "talk" is assigned with the highest attention weight. With reference to the left side of FIG. 4 and the middle of FIG. 4, a corrected attention weight distribution corresponding to the current element "Bush" on the right side of FIG. 4 is obtained. That is, the phrase "held a talk" is assigned with most attention weights. In a process that the network representation corresponding to the word "Bush" is calculated, value vectors corresponding to the three words "held a talk" are considered emphatically. In this way, information of the phrase "held a talk" is captured and is associated with the word "Bush".

According to the network representation generating method for a neural network, the locally strengthened matrix is constructed based on the request vector sequence corresponding to the input sequence, so that attention weights can be assigned in the locally strengthened range, to strengthen local information. By performing the linear transformation on the source-side vector representation sequence corresponding to the input sequence, the request vector sequence, the key vector sequence and the value vector sequence are obtained. The logical similarity degree is obtained according to the request vector sequence and the key vector sequence. The nonlinear transformation is performed based on the logical similarity degree and the locally strengthened matrix, to obtain the locally strengthened attention weight distributions, correcting original attention weights. A weighted sum is performed on the value vector sequence according to the locally strengthened attention weight distributions, so that a network representation sequence with the strengthened local information can be obtained. In the obtained network representation sequence not only the local information can be strengthened, but also an association between elements in the input sequence far away from each other can be retained.

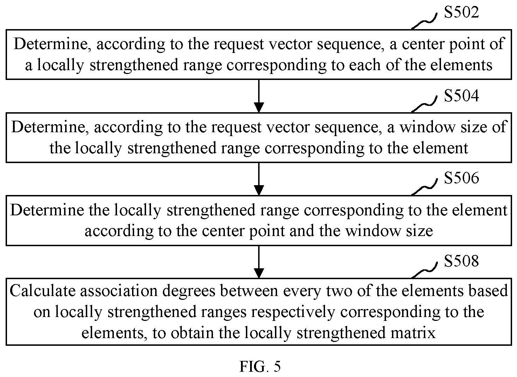

As shown in FIG. 5, in an embodiment, the process of constructing the locally strengthened matrix according to the request vector sequence may be implemented by performing the following steps S502 to S508.

In S502, according to the request vector sequence, a center point of a locally strengthened range corresponding to each of the elements is determined.

The locally strengthened range corresponding to each element in the input sequence is determined by the center point and the window size corresponding to the element. The center point corresponding to the element depends on the request vector corresponding to the element. Therefore, the center point of the locally strengthened range corresponding to the element may be determined according to the request vector.

In an embodiment, the process of determining, according to the request vector sequence, a center point of a locally strengthened range corresponding to each element may be implemented by performing the following steps including: performing, for each element in the input sequence, a transformation on a request vector corresponding to the element in the request vector sequence by a first feedforward neural network, to obtain a first scalar corresponding to the element; performing a nonlinear transformation on the first scalar by a nonlinear transformation function, to obtain a second scalar proportional to a length of the input sequence; and determining the second scalar as the center point of the locally strengthened range corresponding to the element.

The computer device may determine, according to the request vector sequence obtained in step S204, a center point of a locally strengthened range corresponding to each element. Taking the i-th element $x_i$ in the input sequence as an example, a center point of a locally strengthened range corresponding to the i-th element $x_i$ may be obtained by performing the following steps 1) and 2).

In 1), the computer device maps a request vector $q_i$ corresponding to the i-th element into a hidden state by a first feedforward neural network, and performs a linear transformation on the request vector $q_i$ by $U_P^T$, to obtain a first scalar $p_i$ corresponding to the i-th element in the input sequence. The first scalar $p_i$ is a value in a real number space, and is calculated according to the following formula:

$$p_i = U_P^T \tanh\left(W_P q_i\right)$$

where $\tanh(W_P q_i)$ is a part of the first feedforward neural network, tanh is an activation function, $q_i$ is a request vector corresponding to the i-th element in the input sequence, $U_P^T$ and $W_P$ each are a trainable linear transformation matrix, $U_P^T$ is a transposed matrix of $U_P$, $U_P$ is a d-dimensional column vector, and $U_P^T$ is a d-dimensional row vector. In this way, a high-dimensional vector outputted by the feedforward neural network is mapped to a scalar. Herein and in the following, the vector is mapped into the hidden state by the feedforward neural network. The method for mapping the vector through the feedforward neural network is not limited thereto, and the feedforward neural network may be replaced with other neural network models, such as a long short-term memory (LSTM) model and variations thereof, a gated unit and variations thereof, or by performing simple linear transformation.

In 2), the computer device converts the first scalar $p_i$ into a scalar whose value range is (0,1) by a nonlinear transformation function, and multiplies the scalar by a length $l$ of the input sequence, to obtain a center point position $P_i$ whose value range is (0,1). $P_i$ is a center point of a locally strengthened range corresponding to the i-th element, and $P_i$ is proportional to the length $l$ of the input sequence. $P_i$ may be calculated according to the following formula:

$$P_i = I \cdot sigmoid\left(p_i\right)$$

where *sigmoid* is a nonlinear transformation function and is used to convert $p_i$ into a scalar whose value range is (0,1). The method of converting the scalar using *sigmoid* herein and in the following may be replaced with another method for mapping any real number into a range (0,1), which is not limited in the present disclosure.

The computer device determines the calculated $P_i$ as the center point of the locally strengthened range corresponding to the i-th element $x_i$ in the input sequence. For example, if the length $l$ of the input sequence is equal to 10, and the calculated $P_i$ is equal to 5, the center point of the locally strengthened range corresponding to $x_i$ is a fifth element in the input sequence. In the process of generating a network representation corresponding to $x_i$, a value vector of the fifth element in the input sequence is assigned with the highest attention weight.

The computer device may repeat the foregoing steps until center points of locally strengthened ranges respectively corresponding to all the elements are each obtained according to a corresponding request vector in the request vector sequence.

In S504, according to the request vector sequence, a window size of the locally strengthened range corresponding to the element is determined.

In order to flexibly predict the window size, a corresponding window size may be predicted for each element. In this case, the computer device may determine, according to each request vector in the request vector sequence, a window size of a locally strengthened range corresponding to each element. That is, each request vector corresponds to one window size.

In an embodiment, the process of determining, according to the request vector sequence, a window size of a locally strengthened range corresponding to each element may be implemented by performing the following steps including: performing, for each element in the input sequence, a linear transformation on a request vector corresponding to the element in the request vector sequence by a second feedforward neural network, to obtain a third scalar corresponding to the element; performing a nonlinear transformation on the third scalar by a nonlinear transformation function, to obtain a fourth scalar proportional to a length of the input sequence; and determining the fourth scalar as the window size of the locally strengthened range corresponding to the element.

The computer device may determine, according to the request vector sequence obtained in step S204, a window size of a locally strengthened range corresponding to each element. Taking the i-th element $x_i$ in the input sequence as an example, a window size of a locally strengthened range corresponding to the i-th element $x_i$ may be obtained by performing the following steps 1) and 2).

In 1), the computer device maps a request vector $q_i$ corresponding to the i-th element into a hidden state by a second feedforward neural network,, and performs a linear transformation on the request vector $q_i$ by $U_D^T$, , to obtain a third scalar $z_i$ corresponding to the i-th element in the input sequence. The third scalar $z_i$ is a value in a real number space, and is calculated according to the following formula:

$$z_i = U_D^T \tanh\left(W_P q_i\right)$$

where tanh ($W_P q_i$) is a part of the second feedforward neural network, tanh is an activation function, $q_i$ is a request vector corresponding to the i-th element in the input sequence, $W_P$ is the same parameter matrix as that used in calculating the hidden state of the center point previously described, $U_D^T$ is a trainable linear transformation matrix, $U_D^T$ is a transposed matrix of $U_D$, $U_D$ is a d-dimensional column vector, and $U_D^T$ is a d-dimensional row vector. In this way, a high-dimensional vector outputted by the feedforward neural network is mapped to a scalar.

In 2), the computer device converts the third scalar $z_i$ into a scalar whose value range is (0,1) by a nonlinear transformation function, and multiplies the scalar by the length $l$ of the input sequence, to obtain a window size $D_i$ whose value range is (0,$l$) . $D_i$ is a window size of a locally strengthened range corresponding to the i-th element, and $D_i$ is proportional to the length $l$ of the input sequence. $D_i$ may be calculated according to the following formula:

$$D_i = I \cdot sigmoid\left(z_i\right)$$

where s$igmoid$ is a nonlinear transformation function and is used to convert $z_i$ into a scalar whose value range is (0,1) .

The computer device determines the calculated $Z_i$ as the window size of the locally strengthened range corresponding to the i-th element $x_i$ in the input sequence. For example, if the length $l$ of the input sequence is equal to 10, and the calculated $Z_i$ is equal to 7, the window size of the locally strengthened range corresponding to $x_i$ is seven elements centered on a center point. In the process of generating a network representation corresponding to $x_i$, attention weights are centralizedly assigned among the seven elements.

The computer device may repeat the foregoing steps until window sizes of locally strengthened ranges respectively corresponding to all the elements are each obtained according to a corresponding request vector in the request vector sequence.

In S506, the locally strengthened range corresponding to the element is determined according to the center point and the window size.

It can be seen from step S502 and step S504 that, since request vectors respectively corresponding to the elements in the input sequence are different from each other, center points and window sizes respectively corresponding to the elements are different from each other. In this case, locally strengthened ranges respectively corresponding to the elements are different from each other. The locally strengthened range is selected according to characteristics of each element itself, which is more flexible.

In S508, based on the locally strengthened ranges respectively corresponding to the elements, association degrees between every two of the elements are calculated based on the locally strengthened ranges respectively corresponding to the elements, to obtain the locally strengthened matrix.

The computer device may calculate the association degrees between every two of the elements based on the determined locally strengthened ranges, to obtain the locally strengthened matrix. An association degree between two of the elements is obtained according to the following formula:

$$G_{ij} = -\frac{2\left(j - P_i\right)^2}{D_i^{\,2}}$$

where $G_{ij}$ is a value of the j-th element of the i-th column vector in the locally strengthened matrix G

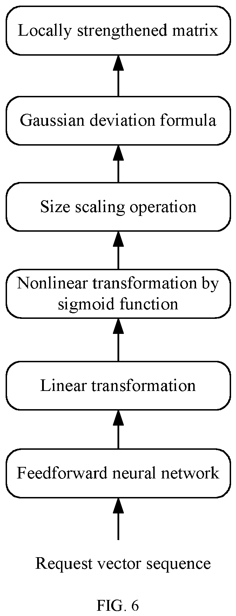

FIG. 6 is a schematic flowchart showing a process of determining a locally strengthened range according to a request vector sequence according to an embodiment. Referring to FIG. 6, the request vector sequence is firstly mapped into a hidden state by a feedforward neural network. The hidden state is mapped to a scalar in a real number space by a linear transformation. The scalar is converted into a scalar whose value range is (0, 1) by a nonlinear transformation function sigmoid and is multiplied by the length I of the input sequence, to obtain a center point and a window size, so as to determine a locally strengthened range. A locally strengthened matrix is calculated based on the locally strengthened range.

In the foregoing embodiment, by performing the transformation on the request vector corresponding to each element in the input sequence, a corresponding locally strengthened range can be flexibly determined for the element, rather than fixing a locally strengthened range for the input sequence, so that the dependence between elements in the input sequence relatively far away from each other can be effectively improved.

In an embodiment, the process of constructing a locally strengthened matrix according to the request vector sequence may be implemented by performing the following steps including: determining, according to the request vector sequence, a center point of a locally strengthened range corresponding to each of the elements; determining, according to the key vector sequence, a uniform window size of locally strengthened ranges respectively corresponding to the elements; determining the locally strengthened range corresponding to the element according to the center point and the window size; and calculating association degrees between every two of the elements based on the locally strengthened ranges, to obtain the locally strengthened matrix.

In this embodiment, the process of determining, according to the request vector sequence, a locally strengthened range corresponding to each element is similar to that in the foregoing, which is not repeated herein, except that global context information is considered when determining the window size. The window sizes of the locally strengthened ranges respectively corresponding to all the elements in the input sequence are determined by a uniform window size. In this case, the information of all the elements in the input sequence is required to be fused when determining the window size.

In an embodiment, the process of determining a uniform window size of the locally strengthened ranges according to the key vector sequence may be implemented by performing the following steps including: obtaining key vectors in the key vector sequence; calculating an average of the key vectors; performing a linear transformation on the average to obtain a fifth scalar; performing a nonlinear transformation on the fifth scalar by a nonlinear transformation function, to obtain a sixth scalar proportional to a length of the input sequence; and determining the sixth scalar as the uniform window size of the locally strengthened ranges.

The computer device may determine the uniform window size of the locally strengthened ranges according to the key vector sequence obtained in step S204. That is, the window sizes of the locally strengthened ranges respectively corresponding to the elements are the same. The uniform window size may be obtained by performing the following steps 1) to 3).

In 1), the computer device obtains a key vector sequence K corresponding to the input sequence, and calculates an average K of all key vectors in the key vector sequence K, i.e.,

$$\overline{K} = \frac{\sum_{i=1}^{I} k_i}{I}$$

In 2), the computer device performs a linear transformation on the obtained average K, to generate a fifth scalar Z in a real number space, i.e.,

$$z = U_D^T \tanh\left(W_D \overline{K}\right)$$

where $U_D^T$ is the same parameter matrix as that used in calculating the hidden state of the window size previously described, and $W_D$ is a trainable linear transformation matrix.

In 3), the computer device converts the fifth scalar $Z$ into a scalar whose value range is $(0,1)$ by a nonlinear transformation function, and multiplies the scalar by the length $I$ of the input sequence, to obtain a window size $D$ whose value range is $(0, I)$. $D$ is a uniform window size of locally strengthened ranges, and $D$ is proportional to the length $I$ of the input sequence. $D$ may be calculated according to the following formula:

$$D = I \cdot sigmoid(z)$$

where *Sigmoid* is a nonlinear transformation function, and is used to convert $Z$ into a scalar whose value range is $(0,1)$.

Although the window sizes of the locally strengthened ranges respectively corresponding to the elements are the same, the locally strengthened ranges respectively corresponding to the elements are different from each other since the center point corresponding to each element is calculated according to the corresponding request vector. The computer device may calculate the association degrees between every two of the elements based on the determined locally strengthened ranges, to obtain the locally strengthened matrix. An association degree between two of the elements is obtained according to the following formula:

$$G_{ij} = -\frac{2(j - P_i)^2}{D_i^2}$$

where $G_{ij}$ is a value of the j-th element of the i-th column vector in the locally strengthened matrix $G$

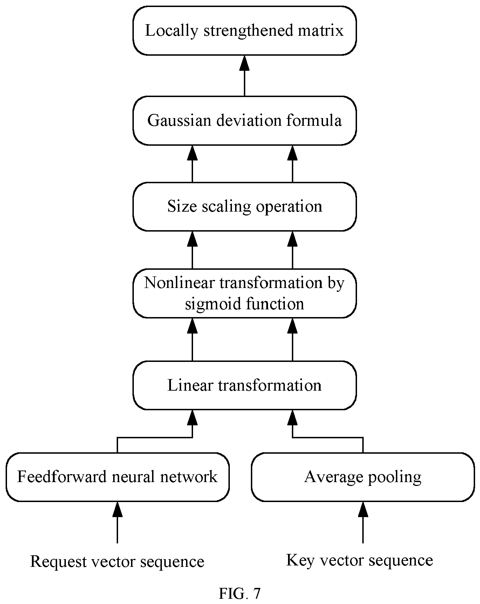

FIG. 7 is a schematic flowchart showing a process of determining a locally strengthened range according to a request vector sequence and a key vector sequence according to an embodiment. Referring to FIG. 7, the request vector sequence is mapped into a hidden state by a feedforward neural network, and an average of the key vector sequence is calculated by average pooling. The hidden state is mapped to a scalar in a real number space by a linear transformation, and the average is mapped to a scalar in the real number space by the linear transformation. The obtained scalars each are converted into a scalar whose value range is $(0, 1)$ by a nonlinear transformation function sigmoid, and the scalar is multiplied by the length I of the input sequence, to obtain a center point and a window size, so as to determine a locally strengthened range.

In the foregoing embodiment, by performing the transformation on the key vector sequence corresponding to the input sequence, where the key vector sequence includes feature vectors (key vectors) corresponding to all the elements in the input sequence, all the context information is considered when determining the uniform window size, so that abundant context information can be captured by the locally strengthened range corresponding to each element determined based on the uniform window size.

In an embodiment, the process of performing the linear transformation on the source-side vector representation sequence, to respectively obtain the request vector sequence, the key vector sequence and the value vector sequence corresponding to the source-side vector representation sequence may be implemented by performing the following steps including: dividing the source-side vector representation sequence into multiple source-side vector representation subsequences having a low dimension; and performing different linear transformations on each of the source-side vector representation subsequences respectively by multiple different parameter matrices, to obtain a request vector sequence, a key vector sequence and a value vector sequence corresponding to the source-side vector representation subsequence. The method further includes: splicing network representation subsequences respectively corresponding to the source-side vector representation subsequences, and performing a linear transformation, to obtain a network representation sequence to be outputted.

A stacked multi-head neural network may be used for processing the source-side vector representation sequence corresponding to the input sequence. In this case, the source-side vector representation sequence may be divided, to obtain multiple (also called as multi-head) source-side vector representation subsequences having a low dimension. For example, the source-side vector representation sequence includes five elements, and each element is a 512-dimensional column vector. The source-side vector representation sequence is divided into eight parts. That is, eight 5x64 source-side vector representation subsequences are obtained. The eight source-side vector representation subsequences, as input vectors are transformed respectively by different subspaces, to output eight 5x64 network representation subsequences. The eight network representation subsequences are spliced and a linear transformation is performed, to output a 5x512-dimensional network representation sequence.

For example, the stacked multi-head neural network includes H subspaces. First, an input sequence $X = \{x_1, x_2, x_3, ..., x_I\}$ is converted into a source-side vector representation sequence $Z = \{z_1, z_2, z_3, ..., z_I\}$. H source-side vector representation subsequences are obtained by dividing $Z = \{z_1, z_2, z_3, ..., z_I\}$. Then, the source-side vector representation subsequences are transformed respectively in the subspaces. Taking the transformation in an h-th (where h= 1, 2, ..., H) subspace as an example, in the h-th subspace, linear transformations are performed on $Z_h = z_{h1}, z_{h2}, z_{h3}, ..., z_{hI}\}$ respectively by corresponding learnable parameter matrices $W_h^Q$, $W_h^K$, and $W_h^V$, to obtain a request vector sequence $Q_h$, a key vector sequence $K_h$, and a value vector sequence $V_h$. In the H subspaces, three learnable parameter matrices used in a subspace each are different from that used in another subspace, so that different feature vectors are obtained in the subspaces, and different local information can be concerned in the different subspaces.

Next, in the h-th subspace, a logical similarity degree $E_h$ between the request vector sequence and the key vector sequence is calculated according to

$$E_h = \frac{Q_h \cdot K_h^T}{\sqrt{d}}$$

Then, a locally strengthened matrix $G_h$ corresponding to the h-th subspace is constructed according to the request vector sequence $Q_h$ or the key vector sequence $K_h$. In the

$$G_{hi,j} = -\frac{2\left(j - P_{hi}\right)^2}{D_{hi}^2}$$

locally strengthened matrix $G_h$, each element $G_{hi,hj}$ is calculated according to In the formula, a center point $P_{hi}$ of a locally strengthened range corresponding to an i-th element is determined according to $Q_h$, and a window size $D_{hi}$ of the locally strengthened range corresponding to the i-th element is determined according to $Q_h$ or $K_h$ $G_{hi,hj}$ is a value of a j-th element of an i-th column vector in the locally strengthened matrix $G_h$, and $G_{hi,hj}$ represents an association degree between a j-th element and the center point $P_{hi}$ corresponding to the i-th element in the input sequence expressed in the h-th subspace.

Next, in the h-th subspace, softmax nonlinear transformation is performed to convert the logical similarity degree into an attention weight distribution. The logical similarity degree is corrected by the locally strengthened matrix $G_h$, to obtain an attention weight distribution $A_h = soft\max(E_h + G_h)$. Further, in the h-th subspace, an output representation sequence $O_h$ corresponding to the input sequence is calculated according to $O = Concat(O_1, O_2, O_3, ..., O_H)W^O$. Finally, output representation sequences $O_h$ in the subspaces are spliced, and a linear transformation is reperformed, to obtain a final output vector $O = Concat(O_1, O_2, O_3, ..., O_h, ..., O_H)W^O$.

In an embodiment, the method further includes: after the network representation sequence corresponding to the input sequence is obtained, determining the network representation sequence as a new source-side vector representation sequence, and returning to the step of performing a linear transformation on the source-side vector representation sequence, to respectively obtain a request vector sequence, a key vector sequence and a value vector sequence corresponding to the source-side vector representation sequence to perform the method again until a loop stop condition is met, and outputting a final network representation sequence.

The neural network may stack multiple layers of calculation. Whether in a one-layer neural network or in a stacked multi-head neural network, the calculation may be repeatedly performed for multiple times. In the calculation of each layer, an output of a previous layer is used as an input of a current layer, and the step of performing linear transformation, to respectively obtain a request vector sequence, a key vector sequence and a value vector sequence is repeatedly performed until an output of the current layer, i.e., a network representation sequence of the current layer, is obtained. Considering efficiency and performance, the number of times of repetitions may be 6, and network parameters of the neural network at a layer are different from those at another layer. It may be understood that, a process of repeating for 6 times is actually a process of updating a source-side vector representation sequence of an original input sequence for 6 times by the network parameters at each layer.

For example, in the stacked multi-head neural network, an output of a first layer is $O^{L1}$. In the calculation of a second layer, $O^{L1}$ is used as an input, and transformation is performed on $O^{L1}$ by network parameters of the second layer, to output an output $O^{L2}$ of the second layer, and so on, until the number of times of repetitions is reached, and an output obtained by the repetition for 6 times is used as a final output, that is, $O^{L6}$ is used as the network representation sequence corresponding to the input sequence.

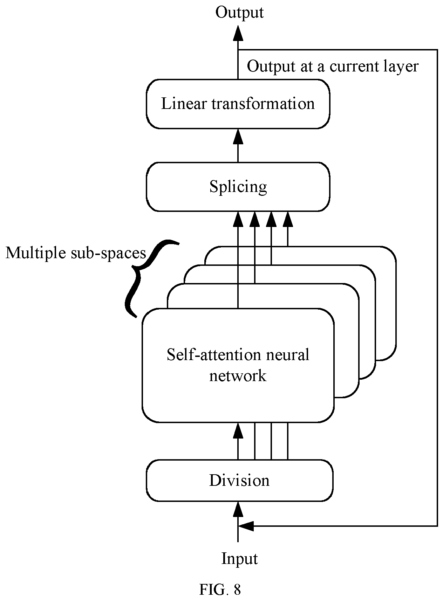

FIG. 8 is a schematic structural diagram of a stacked multi-head self-attention neural network having multiple layers according to an embodiment. Referring to FIG. 8, for the layers, inputs thereof are the same, which is an output of the previous layer. The input is divided into multiple sub-inputs, the same transformation is performed on the sub-inputs by respective network parameters of multiple sub-spaces (also called multiple heads), to obtain outputs of the subspaces. The outputs are spliced to obtain an output of a current layer. The output of the current layer is used as an input of a next layer, and the process is repeated for multiple times. An output of a last layer is used as a final output.

In an embodiment, the input sequence may be a to-be-translated text sequence, and a network representation sequence that is outputted includes feature vectors corresponding to words in a translated text. Therefore, a translated sentence may be determined according to the outputted network representation sequence. According to the embodiments of the present disclosure, significant improvements in translation quality for longer phrases and longer sentences are implemented.

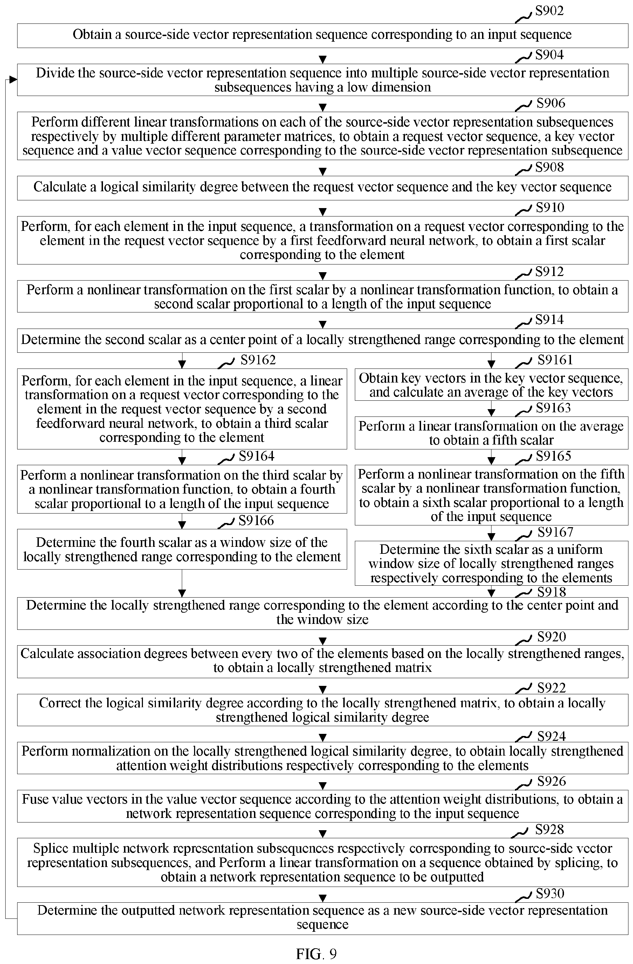

Reference is made to FIG. 9, which is a schematic flowchart of a network representation generating method for a neural network according to an embodiment. The method includes the following steps S902 to S914, S9161 to S9167, and S918 to S930.

In S902, a source-side vector representation sequence corresponding to an input sequence is obtained.

In S904, the source-side vector representation sequence is divided into multiple source-side vector representation subsequences having a low dimension.

In S906, different linear transformations are performed on each of the source-side vector representation subsequences by multiple different parameter matrices, to obtain a request vector sequence, a key vector sequence and a value vector sequence corresponding to the source-side vector representation subsequence.

In S908, a logical similarity degree between the request vector sequence and the key vector sequence is calculated.

In S910, for each element in the input sequence, a transformation is performed on a request vector corresponding to the element in the request vector sequence by a first feedforward neural network, to obtain a first scalar corresponding to the element.

In S912, a nonlinear transformation is performed on the first scalar by a nonlinear transformation function, to obtain a second scalar proportional to a length of the input sequence.

In S914, the second scalar is determined as a center point of a locally strengthened range corresponding to the element.

In S9162, for each element in the input sequence, a linear transformation is performed on a request vector corresponding to the element in the request vector sequence by a second feedforward neural network, to obtain a third scalar corresponding to the element.

In S9164, a nonlinear transformation is performed on the third scalar by a nonlinear transformation function, to obtain a fourth scalar proportional to a length of the input sequence.

In S9166, the fourth scalar is determined as a window size of the locally strengthened range corresponding to the element.

In S9161, key vectors in the key vector sequence are obtained, and an average of the key vectors is calculated.

In S9163, a linear transformation is performed on the average to obtain a fifth scalar.

In S9165, a nonlinear transformation is performed on the fifth scalar by a nonlinear transformation function, to obtain a sixth scalar proportional to a length of the input sequence.

In S9167, the sixth scalar is determined as a uniform window size of locally strengthened ranges respectively corresponding to the elements.

In S918, the locally strengthened range corresponding to the element is determined according to the center point and the window size.

In S920, association degrees between every two of the elements are calculated based on the locally strengthened ranges, to obtain a locally strengthened matrix.

In S922, the logical similarity degree is corrected according to the locally strengthened matrix, to obtain a locally strengthened logical similarity degree.

In S924, normalization is performed on the locally strengthened logical similarity degree, to obtain locally strengthened attention weight distributions respectively corresponding to the elements.

In S926, value vectors in the value vector sequence are fused according to the attention weight distributions, to obtain a network representation sequence corresponding to the input sequence.

In S928, multiple network representation subsequences respectively corresponding to source-side vector representation subsequences are spliced, and a linear transformation is performed, to obtain a network representation sequence to be outputted.

In S930, with the outputted network representation sequence as a new source-side vector representation sequence, the method returns to step S904 until a final network representation sequence is obtained.

According to the network representation generating method for a neural network, the locally strengthened matrix is constructed based on the request vector sequence corresponding to the input sequence, so that attention weights can be assigned in the locally strengthened range, to strengthen local information. By performing the linear transformation on the source-side vector representation sequence corresponding to the input sequence, the request vector sequence, the key vector sequence and the value vector sequence are obtained. The logical similarity degree is obtained according to the request vector sequence and the key vector sequence. The nonlinear transformation is performed based on the logical similarity degree and the locally strengthened matrix, to obtain the locally strengthened attention weight distributions, correcting original attention weights. A weighted sum is performed on the value vector sequence according to the locally strengthened attention weight distributions, so that a network representation sequence with the strengthened local information can be obtained. In the obtained network representation sequence, not only the local information can be strengthened,, but also an association between elements in the input sequence far away from each other can be retained.

It should be noted that, steps in the flowchart in FIG. 9 are sequentially presented as indicated by arrows, but the steps are not necessarily sequentially performed in the order indicated by the arrows. Unless explicitly specified in the present disclosure, the steps are performed without any strict sequence limitation, and may be performed in another order. In addition, at least some of the steps in FIG. 9 may include multiple substeps or multiple stages. The substeps or the stages are not necessarily performed at the same time instant, but may be performed at different time instants. The substeps or stages are not necessarily performed sequentially, and may be performed in turn or alternately with another step or at least some of substeps or stages of the another step.

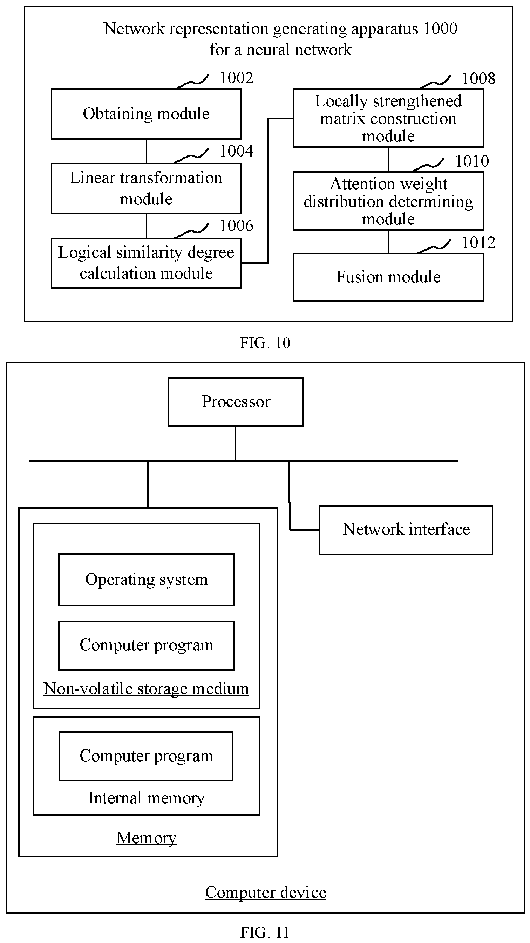

As shown in FIG. 10, a network representation generating apparatus 1000 for a neural network is provided according to an embodiment. The apparatus includes an obtaining module 1002, a linear transformation module 1004, a logical similarity degree calculation module 1006, a locally strengthened matrix construction module 1008, an attention weight distribution determining module 1010, and a fusion module 1012.

The obtaining module 1002 is configured to obtain a source-side vector representation sequence corresponding to an input sequence.

The linear transformation module 1004 is configured to perform linear transformation on the source-side vector representation sequence, to respectively obtain a request vector sequence, a key vector sequence and a value vector sequence corresponding to the source-side vector representation sequence.

The logical similarity degree calculation module 1006 is configured to calculate a logical similarity degree between the request vector sequence and the key vector sequence.

The locally strengthened matrix construction module 1008 is configured to construct a locally strengthened matrix according to the request vector sequence.

The attention weight distribution determining module 1010 is configured to perform a nonlinear transformation based on the logical similarity degree and the locally strengthened matrix, to obtain locally strengthened attention weight distributions corresponding to the elements.

The fusion module 1012 is configured to fuse value vectors in the value vector sequence according to the attention weight distributions, to obtain a network representation sequence corresponding to the input sequence.

In an embodiment, the locally strengthened matrix construction module 1008 is further configured to: determine, according to the request vector sequence, a center point of a locally strengthened range corresponding to each of the elements; determine, according to the request vector sequence, a window size of the locally strengthened range corresponding to the element; determine the locally strengthened range corresponding to the element according to the center point and the window size; and calculate association degrees between every two of the elements based on locally strengthened ranges respectively corresponding to the elements, to obtain the locally strengthened matrix.

In an embodiment, the locally strengthened matrix construction module 1008 is further configured to: determine, according to the request vector sequence, a center point of a locally strengthened range corresponding to each of the elements; determine, according to the key vector sequence, a uniform window size of locally strengthened ranges respectively corresponding to the elements; determine the locally strengthened range corresponding to the element according to the center point and the window size; and calculate association degrees between every two of the elements based on the locally strengthened ranges, to obtain the locally strengthened matrix.

In an embodiment, the locally strengthened matrix construction module 1008 is further configured to: perform, for each element in the input sequence, a transformation on a request vector corresponding to the element in the request vector sequence by a first feedforward neural network, to obtain a first scalar corresponding to the element; perform a nonlinear transformation on the first scalar by a nonlinear transformation function, to obtain a second scalar proportional to a length of the input sequence; and determine the second scalar as the center point of the locally strengthened range corresponding to the element.

In an embodiment, the locally strengthened matrix construction module 1008 is further configured to: perform, for each element in the input sequence, a linear transformation on a request vector corresponding to the element in the request vector sequence by a second feedforward neural network, to obtain a third scalar corresponding to the element; perform a nonlinear transformation on the third scalar by a nonlinear transformation function, to obtain a fourth scalar proportional to a length of the input sequence; and determine the fourth scalar as the window size of the locally strengthened range corresponding to the element.

In an embodiment, the locally strengthened matrix construction module 1008 is further configured to: obtain key vectors in the key vector sequence; calculate an average of the key vectors; perform a linear transformation on the average to obtain a fifth scalar; perform a nonlinear transformation on the fifth scalar by a nonlinear transformation function, to obtain a sixth scalar proportional to a length of the input sequence; and determine the sixth scalar as the uniform window size of the locally strengthened ranges.

In an embodiment, the locally strengthened matrix construction module 1008 is further configured to: determine the center point as a mean of a Gaussian distribution, and determine the window size as a variance of the Gaussian distribution; determine the locally strengthened range according to the Gaussian distribution determined based on the mean and the variance; and sequentially arraying the association degrees between every two of the elements according to an order of the elements in the input sequence, to obtain the locally strengthened matrix. An association degree between two of the elements is calculated according to the following formula:

$$G_{ij} = -\frac{2\left(j - P_i\right)^2}{D_i^2}$$

where $G_{ij}$ represents an association degree between a j-th element and a center point $P_i$ corresponding to an i-th element in the input sequence, and $G_{ij}$ is a value of a j-th element of an i-th column vector in a locally strengthened matrix $G$; $P_i$ represents a center point of a locally strengthened range corresponding to the i-th element; and $D_i$ represents a window size of the locally strengthened range corresponding to the i-th element.

In an embodiment, the attention weight distribution determining module 1010 is further configured to: correct the logical similarity degree according to the locally strengthened matrix, to obtain a locally strengthened logical similarity degree; and perform normalization on the locally strengthened logical similarity degree, to obtain the locally strengthened attention weight distributions respectively corresponding to the elements.

In an embodiment, the linear transformation module 1004 is further configured to: divide the source-side vector representation sequence into multiple source-side vector representation subsequences having a low dimension; and perform different linear transformations on each of the source-side vector representation subsequences respectively by multiple different parameter matrices, to obtain a request vector sequence, a key vector sequence and a value vector sequence corresponding to the source-side vector representation subsequence. The apparatus further includes a splicing module, configured to: splice network representation subsequences respectively corresponding to the source-side vector representation subsequences, and perform a linear transformation, to obtain a network representation sequence to be outputted.

In an embodiment, the apparatus 1000 further includes: a loop module. The loop module is configured to: after the network representation sequence corresponding to the input sequence is obtained, determine the network representation sequence as a new source-side vector representation sequence, and return to the step of performing a linear transformation on the source-side vector representation sequence, to respectively obtain a request vector sequence, a key vector sequence and a value vector sequence corresponding to the source-side vector representation sequence to perform the operations again until a loop stop condition is met, and output a final network representation sequence.

According to the network representation generating apparatus 1000 for a neural network, the locally strengthened matrix is constructed based on the request vector sequence corresponding to the input sequence, so that attention weights can be assigned in the locally strengthened range, to strengthen local information. By performing the linear transformation on the source-side vector representation sequence corresponding to the input sequence, the request vector sequence, the key vector sequence and the value vector sequence are obtained. The logical similarity degree is obtained according to the request vector sequence and the key vector sequence. The nonlinear transformation is performed based on the logical similarity degree and the locally strengthened matrix, to obtain the locally strengthened attention weight distributions, correcting original attention weights. A weighted sum is performed on the value vector sequence according to the locally strengthened attention weight distribution, so that a network representation sequence with the strengthened local information can be obtained. In the obtained network representation sequence, not only the local information can be strengthened, but also an association between elements in the input sequence far away from each other can be retained.

FIG. 11 is a diagram showing an internal structure of a computer device 120 according to an embodiment. As shown in FIG. 11, the computer device includes a processor, memories, and a network interface that are connected to each other via a system bus. The memories include a non-volatile storage medium and an internal memory. The non-volatile storage medium in the computer device stores an operating system, and may further store a computer program. The computer program, when executed by the processor, may cause the processor to implement the network representation generating method for a neural network. The internal memory may also store a computer program. The computer program, when executed by the processor, may cause the processor to perform the network representation generating method for a neural network.

A person skilled in the art may understand that, the structure shown in FIG. 11 is merely a block diagram of a partial structure related to the solution in the present disclosure, and does not constitute a limitation to the computer device to which the solution of the present disclosure is applied. Actually, the computer device may include more or fewer components than those shown in the figure, or some components may be combined, or a different component deployment may be used.

In an embodiment, the network representation generating apparatus 1000 for a neural network provided in the present disclosure may be implemented in a form of a computer program. The computer program may run on the computer device shown in FIG. 11. Program modules forming the network representation generating apparatus 1000 for a neural network, for example, the obtaining module 1002, the linear transformation module 1004, the logical similarity degree calculation module 1006, the locally strengthened matrix construction module 1008, the attention weight distribution determining module 1010, and the fusion module 1012 in FIG. 10, may be stored in the memories of the computer device. The computer program formed by the program modules causes the processor to perform the steps in the network representation generating method for a neural network according to the embodiments of the present disclosure described in this specification.

For example, the computer device shown in FIG. 11 may perform step S202 by the obtaining module 1002 in the network representation generating apparatus for a neural network shown in FIG. 10. The computer device may perform step S204 by the linear transformation module 1004. The computer device may perform step S206 by the logical similarity degree calculation module 1006. The computer device may perform step S208 by the locally strengthened matrix construction module 1008. The computer device may perform step S210 by the attention weight distribution determining module 1010. The computer device may perform step S212 by the fusion module 1012.

A computer device is provided according to an embodiment. The computer device includes a memory and a processor. The memory stores a computer program. The computer program, when executed by the processor, causes the processor to perform the following steps of: obtaining a source-side vector representation sequence corresponding to an input sequence; performing a linear transformation on the source-side vector representation sequence, to respectively obtain a request vector sequence, a key vector sequence and a value vector sequence corresponding to the source-side vector representation sequence; calculating a logical similarity degree between the request vector sequence and the key vector sequence; constructing a locally strengthened matrix according to the request vector sequence; performing a nonlinear transformation based on the logical similarity degree and the locally strengthened matrix, to obtain locally strengthened attention weight distributions respectively corresponding to elements; and fusing value vectors in the value vector sequence according to the attention weight distributions, to obtain a network representation sequence corresponding to the input sequence.

In an embodiment, the computer program, when executed by the processor to perform the step of constructing the locally strengthened matrix according to the request vector sequence, causes the processor to perform the following steps of: determining, according to the request vector sequence, a center point of a locally strengthened range corresponding to each of the elements; determining, according to the request vector sequence, a window size of the locally strengthened range corresponding to the element; determining the locally strengthened range corresponding to the element according to the center point and the window size; and calculating an association degree between every two of the elements based on locally strengthened ranges respectively corresponding to the elements, to obtain the locally strengthened matrix.

In an embodiment, the computer program, when executed by the processor to perform the step of constructing the locally strengthened matrix according to the request vector sequence, causes the processor to perform the following steps of: determining, according to the request vector sequence, a center point of a locally strengthened range corresponding to each of the elements; determining, according to the key vector sequence, a uniform window size of locally strengthened ranges respectively corresponding to the elements; determining the locally strengthened range corresponding to the element according to the center point and the window size; and calculating association degrees between every two of the elements based on the locally strengthened ranges, to obtain the locally strengthened matrix.

In an embodiment, the computer program, when executed by the processor to perform the step of determining, according to the request vector sequence, the center point of the locally strengthened range corresponding to the element, causes the processor to perform the following steps of: performing, for each element in the input sequence, a transformation on a request vector corresponding to the element in the request vector sequence by a first feedforward neural network, to obtain a first scalar corresponding to the element; performing a nonlinear transformation on the first scalar by a nonlinear transformation function, to obtain a second scalar proportional to a length of the input sequence; and determining the second scalar as the center point of the locally strengthened range corresponding to the element.

In an embodiment, the computer program, when executed by the processor to perform the step of determining, according to the request vector sequence, the window size of the locally strengthened range corresponding to the element, causes the processor to perform the following steps of: performing, for each element in the input sequence, a linear transformation on a request vector corresponding to the element in the request vector sequence by a second feedforward neural network, to obtain a third scalar corresponding to the element; performing a nonlinear transformation on the third scalar by a nonlinear transformation function, to obtain a fourth scalar proportional to a length of the input sequence; and determining the fourth scalar as the window size of the locally strengthened range corresponding to the element.

In an embodiment, the computer program, when executed by the processor to perform the step of determining, according to the key vector sequence, the uniform window size of the locally strengthened ranges, causes the processor to perform the following steps of: obtaining key vectors in the key vector sequence; calculating an average of the key vectors; performing a linear transformation on the average to obtain a fifth scalar; performing a nonlinear transformation on the fifth scalar by a nonlinear transformation function, to obtain a sixth scalar proportional to a length of the input sequence; and determining the sixth scalar as the uniform window size of the locally strengthened ranges.

In an embodiment, the computer program, when executed by the processor to perform the step of determine the locally strengthened range corresponding to the element according to the center point and the window size, causes the processor to perform the following steps of: determining the center point as a mean of a Gaussian distribution, and determining the window size as a variance of the Gaussian distribution; and determining the locally strengthened range according to the Gaussian distribution determined based on the mean and the variance. The computer program, when executed by the processor to perform the step of calculating the association degrees between every two of the elements based on the locally strengthened ranges, to obtain the locally strengthening matrix, causes the processor to perform the following steps of: sequentially arraying the association degrees between every two of the elements according to an order of the elements in the input sequence, to obtain the locally strengthened matrix. An association degree between two of the elements is calculated according to the following formula:

$$G_{ij} = -\frac{2(j - P_i)^2}{D_i^2}$$

where $G_{ij}$ represents an association degree between a j-th element and a center point $P_i$ corresponding to an i-th element in the input sequence, and $G_{ij}$ is a value of a j-th element of an i-th column vector in a locally strengthened matrix $G$; $P_i$ represents a center point of a locally strengthened range corresponding to the i-th element; and $D_i$ represents a window size of the locally strengthened range corresponding to the i-th element.

In an embodiment, the computer program, when executed by the processor to perform the step of performing the nonlinear transformation based on the logical similarity degree and the locally strengthened matrix, to obtain the locally strengthened attention weight distributions respectively corresponding to the elements, causes the processor to perform the following steps of: correcting the logical similarity degree according to the locally strengthened matrix, to obtain a locally strengthened logical similarity degree; and performing normalization on the locally strengthened logical similarity degree, to obtain the locally strengthened attention weight distributions respectively corresponding to the elements.

In an embodiment, the computer program, when executed by the processor to perform the step of performing the linear transformation on the source-side vector representation sequence, to respectively obtain the request vector sequence, the key vector sequence and the value vector sequence corresponding to the source-side vector representation sequence, causes the processor to perform the following steps of: dividing the source-side vector representation sequence into multiple source-side vector representation subsequences having a low dimension; and performing different linear transformations on each of the source-side vector representation subsequences respectively by multiple different parameter matrices, to obtain a request vector sequence, a key vector sequence and a value vector sequence corresponding to the source-side vector representation subsequence. The computer program, when executed by the processor, causes the processor to further perform the following steps of: splicing network representation subsequences respectively corresponding to the source-side vector representation subsequences, and performing a linear transformation, to obtain a network representation sequence to be outputted.

In an embodiment, the computer program, when executed by the processor, causes the processor to further perform the following steps of: after the network representation sequence corresponding to the input sequence is obtained, determining the network representation sequence as a new source-side vector representation sequence, and returning to the step of performing a linear transformation on the source-side vector representation sequence, to respectively obtain a request vector sequence, a key vector sequence and a value vector sequence corresponding to the source-side vector representation sequence to perform the method again until a loop stop condition is met, and outputting a final network representation sequence.

According to the computer device, the locally strengthened matrix is constructed based on the request vector sequence corresponding to the input sequence, so that attention weights can be assigned in the locally strengthened range, to strengthen local information. By performing the linear transformation on the source-side vector representation sequence corresponding to the input sequence, the request vector sequence, the key vector sequence and the value vector sequence are obtained. The logical similarity degree is obtained according to the request vector sequence and the key vector sequence, The nonlinear transformation is performed based on the logical similarity degree and the locally strengthened matrix, to obtain the locally strengthened attention weight distribution, correcting original attention weights. A weighted sum is performed on the value vector sequence according to the locally strengthened attention weight distributions, so that a network representation sequence with the strengthened local information can be obtained. In the obtained network representation sequence, not only the local information can be strengthened, but also an association between elements in the input sequence far away from each other can be retained.

A computer-readable storage medium is provided according to an embodiment. The computer-readable storage medium stores a computer program. The computer program, when executed by a processor, causes the processor to perform the following steps of: obtaining a source-side vector representation sequence corresponding to an input sequence; performing a linear transformation on the source-side vector representation sequence, to respectively obtain a request vector sequence, a key vector sequence and a value vector sequence corresponding to the source-side vector representation sequence; calculating a logical similarity degree between the request vector sequence and the key vector sequence; constructing a locally strengthened matrix according to the request vector sequence; performing a nonlinear transformation based on the logical similarity degree and the locally strengthened matrix, to obtain locally strengthened attention weight distributions respectively corresponding to elements; and fusing value vectors in the value vector sequence according to the attention weight distributions, to obtain a network representation sequence corresponding to the input sequence.

In an embodiment, the computer program, when executed by the processor to perform the step of constructing the locally strengthened matrix according to the request vector sequence, causes the processor to perform the following steps of: determining, according to the request vector sequence, a center point of a locally strengthened range corresponding to each of the elements; determining, according to the request vector sequence, a window size of the locally strengthened range corresponding to the element; determining the locally strengthened range corresponding to the element according to the center point and the window size; and calculating association degrees between every two of the elements based on locally strengthened ranges respectively corresponding to the elements, to obtain the locally strengthened matrix.

In an embodiment, the computer program, when executed by the processor to perform the step of constructing the locally strengthened matrix according to the request vector sequence, causes the processor to perform the following steps of: determining, according to the request vector sequence, a center point of a locally strengthened range corresponding to each of the elements; determining, according to the key vector sequence, a uniform window size of locally strengthened ranges respectively corresponding to the elements; determining the locally strengthened range corresponding to the element according to the center point and the window size; and calculating association degrees between every two of the elements based on the locally strengthened ranges, to obtain the locally strengthened matrix.

In an embodiment, the computer program, when executed by the processor to perform the step of determining, according to the request vector sequence, the center point of the locally strengthened range corresponding to the element, causes the processor to perform the following steps of: performing, for each element in the input sequence, a transformation on a request vector corresponding to the element in the request vector sequence by a first feedforward neural network, to obtain a first scalar corresponding to the element; performing a nonlinear transformation on the first scalar by a nonlinear transformation function, to obtain a second scalar proportional to a length of the input sequence; and determining the second scalar as the center point of the locally strengthened range corresponding to the element.

In an embodiment, the computer program, when executed by the processor to perform the step of determining, according to the request vector sequence, the window size of the locally strengthened range corresponding to the element, causes the processor to perform the following steps of: performing, for each element in the input sequence, a linear transformation on a request vector corresponding to the element in the request vector sequence by a second feedforward neural network, to obtain a third scalar corresponding to the element; performing a nonlinear transformation on the third scalar by a nonlinear transformation function, to obtain a fourth scalar proportional to a length of the input sequence; and determining the fourth scalar as the window size of the locally strengthened range corresponding to the element.

In an embodiment, the computer program, when executed by the processor to perform the step of determining, according to the key vector sequence, the uniform window size of the locally strengthened ranges, causes the processor to perform the following steps of: obtaining key vectors in the key vector sequence; calculating an average of the key vectors; performing a linear transformation on the average to obtain a fifth scalar; performing a nonlinear transformation on the fifth scalar by a nonlinear transformation function, to obtain a sixth scalar proportional to a length of the input sequence; and determining the sixth scalar as the uniform window size of the locally strengthened ranges.

In an embodiment, the computer program, when executed by the processor to perform the step of determine the locally strengthened range corresponding to the element according to the center point and the window size, causes the processor to perform the following steps of: determining the center point as a mean of a Gaussian distribution, and determining the window size as a variance of the Gaussian distribution; and determining the locally strengthened range according to the Gaussian distribution determined based on the mean and the variance. The computer program, when executed by the processor to perform the step of calculating the association degrees between every two of the elements based on the locally strengthened ranges, to obtain the locally strengthening matrix, causes the processor to perform the following steps: sequentially arraying the association degrees between every two of the elements according to an order of the elements in the input sequence, to obtain the locally strengthened matrix. An association degree between two of the elements is calculated according to the following formula:

$$G_{ij} = -\frac{2\left(j - P_i\right)^2}{D_i^2}$$

where $G_{ij}$ represents an association degree between a j-th element and a center point $P_i$ corresponding to an i-th element in the input sequence, and $G_{ij}$ is a value of a j-th element of an i-th column vector in a locally strengthened matrix $G$; $P_i$ represents a center point of a locally strengthened range corresponding to the i-th element; and $D_i$ represents a window size of the locally strengthened range corresponding to the i-th element.

In an embodiment, the computer program, when executed by the processor to perform the step of performing the nonlinear transformation based on the logical similarity degree and the locally strengthened matrix, to obtain the locally strengthened attention weight distributions respectively corresponding to the elements, causes the processor to perform the following steps of: correcting the logical similarity degree according to the locally strengthened matrix, to obtain a locally strengthened logical similarity degree; and performing normalization on the locally strengthened logical similarity degree, to obtain the locally strengthened attention weight distributions respectively corresponding to the elements.

In an embodiment, the computer program, when executed by the processor to perform the step of performing the linear transformation on the source-side vector representation sequence, to respectively obtain the request vector sequence, the key vector sequence and the value vector sequence corresponding to the source-side vector representation sequence, causes the processor to perform the following steps of: dividing the source-side vector representation sequence into multiple source-side vector representation subsequences having a low dimension; and performing different linear transformations on each of the source-side vector representation subsequences respectively by multiple different parameter matrices, to obtain a request vector sequence, a key vector sequence and a value vector sequence corresponding to the source-side vector representation subsequence. The computer program, when executed by the processor, causes the processor to further perform the following steps of: splicing network representation subsequences respectively corresponding to the source-side vector representation subsequences, and performing linear transformation, to obtain a network representation sequence to be outputted.

In an embodiment, the computer program, when executed by the processor, causes the processor to further perform the following steps of: after the network representation sequence corresponding to the input sequence is obtained, determining the network representation sequence as a new source-side vector representation sequence, and returning to the step of performing a linear transformation on the source-side vector representation sequence, to respectively obtain a request vector sequence, a key vector sequence and a value vector sequence corresponding to the source-side vector representation sequence to perform the method again until a loop stop condition is met, and outputting a final network representation sequence.

According to the computer-readable storage medium, the locally strengthened matrix is constructed based on the request vector sequence corresponding to the input sequence, so that attention weights can be assigned in the locally strengthened range, to strengthen local information. By performing the linear transformation on the source-side vector representation sequence corresponding to the input sequence, the request vector sequence, the key vector sequence and the value vector sequence are obtained. The logical similarity degree is according to the request vector sequence and the key vector sequence. The nonlinear transformation is performed based on the logical similarity degree and the locally strengthened matrix, to obtain the locally strengthened attention weight distributions, correcting original attention weights. A weighted sum is performed on the value vector sequence according to the locally strengthened attention weight distributions, so that a network representation sequence with the strengthened local information can be obtained. In the obtained network representation sequence, not only the local information can be strengthened, but also an association between elements in the input sequence far away from each other can be retained.

A person of ordinary skill in the art may understand that some or all procedures in the foregoing method embodiments may be implemented by a computer program instructing related hardware. The program may be stored in a non-volatile computer-readable storage medium. When the program is executed, the procedures of the foregoing method embodiments may be performed. Any reference to a memory, a storage, a database, or another medium used in the embodiments provided in the present disclosure may include a non-volatile and/or volatile memory. The non-volatile memory may include a read-only memory (ROM), a programmable ROM (PROM), an electrically programmable ROM (EPROM), an electrically erasable programmable ROM (EEPROM), a flash memory, or the like. The volatile memory may include a random access memory (RAM) or an external cache. As an illustration instead of a limitation, the RAM may be implemented in various forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments merely show several implementations of the present disclosure, and are described in detail, but cannot be understood as a limitation to the patent scope of the present disclosure. It should be noted that, a person of ordinary skill in the art may further make variations and improvements without departing from the ideas of the present disclosure. The variations and improvements fall within the protection scope of the present disclosure. Therefore, the protection scope of the patent of the present disclosure shall be defined by the appended claims.

## Claims

1. A network representation generating method for a neural network, the method being applied to a computer device and comprising:

   obtaining a source-side vector representation sequence corresponding to an input sequence;
   performing a linear transformation on the source-side vector representation sequence, to respectively obtain a request vector sequence, a key vector sequence and a value vector sequence corresponding to the source-side vector representation sequence;
   calculating a logical similarity degree between the request vector sequence and the key vector sequence;
   constructing a locally strengthened matrix according to the request vector sequence;
   performing a nonlinear transformation based on the logical similarity degree and the locally strengthened matrix, to obtain locally strengthened attention weight distributions respectively corresponding to elements; and
   fusing value vectors in the value vector sequence according to the attention weight distributions, to obtain a network representation sequence corresponding to the input sequence.

2. The method according to claim 1, wherein the constructing a locally strengthened matrix according to the request vector sequence comprises:

   determining, according to the request vector sequence, a center point of a locally strengthened range corresponding to each of the elements;
   determining, according to the request vector sequence, a window size of the locally strengthened range corresponding to the element;
   determining the locally strengthened range corresponding to the element according to the center point and the window size; and
   calculating association degrees between every two of the elements based on locally strengthened ranges respectively corresponding to the elements, to obtain the locally strengthened matrix.

3. The method according to claim 1, wherein the constructing a locally strengthened matrix according to the request vector sequence comprises:

   determining, according to the request vector sequence, a center point of a locally strengthened range corresponding to each of the elements;
   determining, according to the key vector sequence, a uniform window size of locally strengthened ranges respectively corresponding to the elements;
   determining the locally strengthened range corresponding to the element according to the center point and the window size; and
   calculating association degrees between every two of the elements based on the locally strengthened ranges, to obtain the locally strengthened matrix.

4. The method according to claim 2 or 3, wherein the determining, according to the request vector sequence, a center point of a locally strengthened range corresponding to each of the elements comprises:

   performing, for each element in the input sequence, a transformation on a request vector corresponding to the element in the request vector sequence by a first feedforward neural network, to obtain a first scalar corresponding to the element;
   performing a nonlinear transformation on the first scalar by a nonlinear transformation function, to obtain a second scalar proportional to a length of the input sequence; and
   determining the second scalar as the center point of the locally strengthened range corresponding to the element.

5. The method according to claim 2, wherein the determining, according to the request vector sequence, a window size of the locally strengthened range corresponding to the element comprises:

   performing, for each element in the input sequence, a linear transformation on a request vector corresponding to the element in the request vector sequence by a second feedforward neural network, to obtain a third scalar corresponding to the element;
   performing a nonlinear transformation on the third scalar by a nonlinear transformation function, to obtain a fourth scalar proportional to a length of the input sequence; and
   determining the fourth scalar as the window size of the locally strengthened range corresponding to the element.

6. The method according to claim 3, wherein the determining, according to the key vector sequence, a uniform window size of locally strengthened ranges respectively corresponding to the elements comprises:

   obtaining key vectors in the key vector sequence;
   calculating an average of the key vectors;
   performing a linear transformation on the average to obtain a fifth scalar;
   performing a nonlinear transformation on the fifth scalar by a nonlinear transformation function, to obtain a sixth scalar proportional to a length of the input sequence; and
   determining the sixth scalar as the uniform window size of the locally strengthened ranges.

7. The method according to claim 2 or 3, wherein
   the determining the locally strengthened range corresponding to the element according to the center point and the window size comprises:

   determining the center point as a mean of a Gaussian distribution, and determining the window size as a variance of the Gaussian distribution; and
   determining the locally strengthened range according to the Gaussian distribution determined based on the mean and the variance; and

   calculating the association degrees between every two of the elements based on the locally strengthened ranges, to obtain the locally strengthened matrix comprises:
   sequentially arraying the association degrees between every two of the elements according to an order of the elements in the input sequence, to obtain the locally strengthened matrix, an association degree between two of the elements being calculated according to the following formula:

   $$G_{ij} = -\frac{2(j - P_i)^2}{D_i^2},$$

   wherein $G_{ij}$ represents an association degree between a j-th element and a center point $P_i$ corresponding to an i-th element in the input sequence, and $G_{ij}$ is a value of a j-th element of an i-th column vector in a locally strengthened matrix $G$; $P_i$ represents a center point of a locally strengthened range corresponding to the i-th element; and $D_i$ represents a window size of the locally strengthened range corresponding to the i-th element.

8. The method according to any one of claims 1 to 3, wherein the performing a nonlinear transformation based on the logical similarity degree and the locally strengthened matrix, to obtain locally strengthened attention weight distributions respectively corresponding to the elements comprises:

correcting the logical similarity degree according to the locally strengthened matrix, to obtain a locally strengthened logical similarity degree; and

performing normalization on the locally strengthened logical similarity degree, to obtain the locally strengthened attention weight distributions respectively corresponding to the elements.

9. The method according to any one of claims 1 to 3, wherein
the performing a linear transformation on the source-side vector representation sequence, to respectively obtain a request vector sequence, a key vector sequence and a value vector sequence corresponding to the source-side vector representation sequence comprises:

dividing the source-side vector representation sequence into a plurality of source-side vector representation subsequences having a low dimension; and

performing different linear transformations on each of the source-side vector representation subsequences respectively by a plurality of different parameter matrices, to obtain a request vector sequence, a key vector sequence and a value vector sequence corresponding to the source-side vector representation subsequence; and

the method further comprises:
splicing network representation subsequences respectively corresponding to the source-side vector representation subsequences, and performing a linear transformation, to obtain a network representation sequence to be outputted.

10. The method according to any one of claims 1 to 3, further comprising:
after the network representation sequence corresponding to the input sequence is obtained, determining the network representation sequence as a new source-side vector representation sequence, and returning to the step of performing a linear transformation on the source-side vector representation sequence, to respectively obtain a request vector sequence, a key vector sequence and a value vector sequence corresponding to the source-side vector representation sequence to perform the method again until a loop stop condition is met, and outputting a final network representation sequence.

11. A network representation generating apparatus for a neural network, the apparatus comprising:

an obtaining module, configured to obtain a source-side vector representation sequence corresponding to an input sequence;

a linear transformation module, configured to perform a linear transformation on the source-side vector representation sequence, to respectively obtain a request vector sequence, a key vector sequence and a value vector sequence corresponding to the source-side vector representation sequence;

a logical similarity degree calculation module, configured to calculate a logical similarity degree between the request vector sequence and the key vector sequence;

a locally strengthened matrix construction module, configured to construct a locally strengthened matrix according to the request vector sequence;

an attention weight distribution determining module, configured to perform a nonlinear transformation based on the logical similarity degree and the locally strengthened matrix, to obtain locally strengthened attention weight distributions respectively corresponding to elements; and

a fusion module, configured to fuse value vectors in the value vector sequence according to the attention weight distributions, to obtain a network representation sequence corresponding to the input sequence.

12. The apparatus according to claim 11, wherein the locally strengthened matrix construction module is further configured to: determine, according to the request vector sequence, a center point of a locally strengthened range corresponding to each of the elements; determine, according to the request vector sequence, a window size of the locally strengthened range corresponding to the element; determine the locally strengthened range corresponding to the element according to the center point and the window size; and calculate association degrees between every two of the elements based on locally strengthened ranges respectively corresponding to the elements, to obtain the locally strengthened matrix.

13. The apparatus according to claim 11, wherein the locally strengthened matrix construction module is further configured to: determine, according to the request vector sequence, a center point of a locally strengthened range corresponding to each of the elements; determine, according to the key vector sequence, a uniform window size of locally strengthened ranges respectively corresponding to the elements; determine the locally strengthened range corresponding to the element according to the center point and the window size; and calculate association degrees between every two of the elements based on the locally strengthened ranges, to obtain the locally strengthened matrix.

14. The apparatus according to claim 12 or 13, wherein the locally strengthened matrix construction module is further configured to: perform, for each element in the input sequence, a transformation on a request vector corresponding to the element in the request vector sequence by a first feedforward neural network, to obtain a first scalar corresponding to the element; perform a nonlinear transformation on the first scalar by a nonlinear transformation function, to obtain a second scalar proportional to a length of the input sequence; and determine the second scalar as the center point of the locally strengthened range corresponding to the element.

15. The apparatus according to claim 12, wherein the locally strengthened matrix construction module is further configured to: perform, for each element in the input sequence, a linear transformation on a request vector corresponding to the element in the request vector sequence by a second feedforward neural network, to obtain a third scalar corresponding to the element; perform a nonlinear transformation on the third scalar by a nonlinear transformation function, to obtain a fourth scalar proportional to a length of the input sequence; and determine the fourth scalar as the window size of the locally strengthened range corresponding to the element.

16. The apparatus according to claim 13, wherein the locally strengthened matrix construction module is further configured to: obtain key vectors in the key vector sequence; calculate an average of the key vectors; perform a linear transformation on the average to obtain a fifth scalar; perform a nonlinear transformation on the fifth scalar by a nonlinear transformation function, to obtain a sixth scalar proportional to a length of the input sequence; and determine the sixth scalar as the uniform window size of the locally strengthened ranges.

17. The apparatus according to claim 12 or 13, wherein the locally strengthened matrix construction module is further configured to: determine the center point as a mean of a Gaussian distribution, and determine the window size as a variance of the Gaussian distribution; determine the locally strengthened range according to the Gaussian distribution determined based on the mean and the variance; and sequentially array the association degrees between every two of the elements according to an order of the elements in the input sequence, to obtain the locally strengthened matrix, an association degree between two of the elements being calculated according to the following formula:

$$G_{ij} = -\frac{2\left(j - P_i\right)^2}{D_i^2},$$

wherein $G_{ij}$ represents an association degree between a j-th element and a center point $P_i$ corresponding to an i-th element in the input sequence, and $G_{ij}$ is a value of a j-th element of an i-th column vector in a locally strengthened matrix $G$; $P_i$ represents a center point of a locally strengthened range corresponding to the i-th element; and $D_i$ represents a window size of the locally strengthened range corresponding to the i-th element.

18. The apparatus according to any one of claims 11 to 13, wherein the attention weight distribution determining module is further configured to: correct the logical similarity degree according to the locally strengthened matrix, to obtain a locally strengthened logical similarity degree; and perform normalization on the locally strengthened logical similarity degree, to obtain the locally strengthened attention weight distributions respectively corresponding to the elements.

19. The apparatus according to any one of claims 11 to 13, wherein the linear transformation module is further configured to: divide the source-side vector representation sequence into a plurality of source-side vector representation subsequences having a low dimension; and perform different linear transformations on each of the source-side vector representation subsequences respectively by a plurality of different parameter matrices, to obtain a request vector sequence, a key vector sequence and a value vector sequence corresponding to the source-side vector representation subsequence; and
the apparatus further comprises:
a splicing module, configured to splice network representation subsequences respectively corresponding to the source-side vector representation subsequences, and perform a linear transformation, to obtain a network representation sequence to be outputted.

20. The apparatus according to any one of claims 11 to 13, further comprising:

a loop module, configured to: after the network representation sequence corresponding to the input sequence is obtained, determine the network representation sequence as a new source-side vector representation sequence, and return to the step of performing a linear transformation on the source-side vector representation sequence, to respectively obtain a request vector sequence, a key vector sequence and a value vector sequence corresponding to the source-side vector representation sequence to perform the operations again until a loop stop condition is met, and output a final network representation sequence.

21. A computer-readable storage medium, storing a computer program that, when executed by a processor, causes the processor to perform the operations of the method according to any one of claims 1 to 10.

22. A computer device, comprising:

a memory storing a computer program; and
a processor, wherein
the computer program, when executed by the processor, causes the processor to perform the operations of the method according to any one of claims 1 to 10.

110                                                      120

FIG. 1

S202

Obtain a source-side vector representation sequence corresponding to an input sequence

S204

Perform a linear transformation on the source-side vector representation sequence, to respectively obtain a request vector sequence, a key vector sequence and a value vector sequence corresponding to the source-side vector representation sequence

S206

Calculate a logical similarity degree between the request vector sequence and the key vector sequence

S208

Construct a locally strengthened matrix according to the request vector sequence

S210

Perform a nonlinear transformation based on the logical similarity degree and the locally strengthened matrix, to obtain locally strengthened attention weight distributions respectively corresponding to elements

S212

Fuse value vectors in the value vector sequence according to the attention weight distributions, to obtain a network representation sequence corresponding to the input sequence

FIG. 2

$O$

Dot product operation

$A$

Softmax nonlinear transformation

$E'$

Addition operation

$G$ | $E$

Gaussian deviation | Dot product operation

$K$    $Q$    $V$

Linear transformation

$Z$

Word embedding

$X$

FIG. 3

Bush held a talk with Sharon
布什 举行了一次 会谈 和 沙仑

×

├─ D ─┤

Bush held a talk with Sharon
布什 举行了一次 会谈 和 沙仑

=

Bush held a talk with Sharon
布什 举行了一次 会谈 和 沙仑

FIG. 4

S502

Determine, according to the request vector sequence, a center point of a locally strengthened range corresponding to each of the elements

S504

Determine, according to the request vector sequence, a window size of the locally strengthened range corresponding to the element

S506

Determine the locally strengthened range corresponding to the element according to the center point and the window size

S508

Calculate association degrees between every two of the elements based on locally strengthened ranges respectively corresponding to the elements, to obtain the locally strengthened matrix

FIG. 5

Locally strengthened matrix

↑

Gaussian deviation formula

↑

Size scaling operation

↑

Nonlinear transformation by sigmoid function

↑

Linear transformation

↑

Feedforward neural network

↑

Request vector sequence

FIG. 6

Locally strengthened matrix

↑

Gaussian deviation formula

↑ ↑

Size scaling operation

↑ ↑

Nonlinear transformation by sigmoid function

↑ ↑

Linear transformation

↑ ↑

Feedforward neural network | Average pooling

↑ ↑

Request vector sequence | Key vector sequence

FIG. 7

Output

Output at a current layer

Linear transformation

Splicing

Multiple sub-spaces

Self-attention neural network

Division

Input

FIG. 8

S902
Obtain a source-side vector representation sequence corresponding to an input sequence

S904
Divide the source-side vector representation sequence into multiple source-side vector representation subsequences having a low dimension

S906
Perform different linear transformations on each of the source-side vector representation subsequences respectively by multiple different parameter matrices, to obtain a request vector sequence, a key vector sequence and a value vector sequence corresponding to the source-side vector representation subsequence

S908
Calculate a logical similarity degree between the request vector sequence and the key vector sequence

S910
Perform, for each element in the input sequence, a transformation on a request vector corresponding to the element in the request vector sequence by a first feedforward neural network, to obtain a first scalar corresponding to the element

S912
Perform a nonlinear transformation on the first scalar by a nonlinear transformation function, to obtain a second scalar proportional to a length of the input sequence

S914
Determine the second scalar as a center point of a locally strengthened range corresponding to the element

S9162
Perform, for each element in the input sequence, a linear transformation on a request vector corresponding to the element in the request vector sequence by a second feedforward neural network, to obtain a third scalar corresponding to the element

S9161
Obtain key vectors in the key vector sequence, and calculate an average of the key vectors

S9163
Perform a linear transformation on the average to obtain a fifth scalar

S9164
Perform a nonlinear transformation on the third scalar by a nonlinear transformation function, to obtain a fourth scalar proportional to a length of the input sequence

S9165
Perform a nonlinear transformation on the fifth scalar by a nonlinear transformation function, to obtain a sixth scalar proportional to a length of the input sequence

S9166
Determine the fourth scalar as a window size of the locally strengthened range corresponding to the element

S9167
Determine the sixth scalar as a uniform window size of locally strengthened ranges respectively corresponding to the elements

S918
Determine the locally strengthened range corresponding to the element according to the center point and the window size

S920
Calculate association degrees between every two of the elements based on the locally strengthened ranges, to obtain a locally strengthened matrix

S922
Correct the logical similarity degree according to the locally strengthened matrix, to obtain a locally strengthened logical similarity degree

S924
Perform normalization on the locally strengthened logical similarity degree, to obtain locally strengthened attention weight distributions respectively corresponding to the elements

S926
Fuse value vectors in the value vector sequence according to the attention weight distributions, to obtain a network representation sequence corresponding to the input sequence

S928
Splice multiple network representation subsequences respectively corresponding to source-side vector representation subsequences, and Perform a linear transformation on a sequence obtained by splicing, to obtain a network representation sequence to be outputted

S930
Determine the outputted network representation sequence as a new source-side vector representation sequence

FIG. 9

Network representation generating apparatus 1000
for a neural network

~ 1002
Obtaining module

~ 1004
Linear transformation
module

~ 1006
Logical similarity degree
calculation module

~ 1008
Locally strengthened
matrix construction
module

~ 1010
Attention weight
distribution determining
module

~ 1012
Fusion module

FIG. 10

Processor

Network interface

Operating system

Computer program

Non-volatile storage medium

Computer program

Internal memory

Memory

Computer device

FIG. 11

## INTERNATIONAL SEARCH REPORT

| International application No. |
|---|
| **PCT/CN2019/100212** |

| | |
|---|---|
| **A.** | **CLASSIFICATION OF SUBJECT MATTER** |
| | G06N 3/04(2006.01)i |
| | According to International Patent Classification (IPC) or to both national classification and IPC |

| | |
|---|---|
| **B.** | **FIELDS SEARCHED** |

Minimum documentation searched (classification system followed by classification symbols)

G06N; G06F

Documentation searched other than minimum documentation to the extent that such documents are included in the fields searched

Electronic data base consulted during the international search (name of data base and, where practicable, search terms used)

CNPAT; CNKI; WPI; EPODOC: 神经网络, 深度学习, 注意力, 自然语言处理, 自关注神经网络, 向量, 输入, 相似, 变换, 表示, neural networks, deep learning, attention, NLP, SAN, vector, input, similar+, transform+, represent+

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 109034378 A (TENCENT TECHNOLOGY SHENZHEN CO., LTD.) 18 December 2018 (2018-12-18) description, paragraphs [0037]-[0220] | 1-22 |
| A | CN 107797992 A (BEIJING BAIFENDIAN INFORMATION SCIENCE AND TECHNOLOGY CO., LTD.) 13 March 2018 (2018-03-13) description, paragraphs [0081]-[0162] | 1-22 |
| A | CN 107783960 A (BAIDU ONLINE NETWORK TECHNOLOGY (BEIJING) CO., LTD.) 09 March 2018 (2018-03-09) entire document | 1-22 |
| A | US 2018240013 A1 (GOOGLE INC.) 23 August 2018 (2018-08-23) entire document | 1-22 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 October 2019** | **28 October 2019** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

| | | International application No. |
|---|---|---|
| | | **PCT/CN2019/100212** |

| Patent document cited in search report | | | Publication date (day/month/year) | Patent family member(s) | | | Publication date (day/month/year) |
|---|---|---|---|---|---|---|---|
| CN | 109034378 | A | 18 December 2018 | None | | | |
| CN | 107797992 | A | 13 March 2018 | None | | | |
| CN | 107783960 | A | 09 March 2018 | US | 2019122145 | A1 | 25 April 2019 |
| US | 2018240013 | A1 | 23 August 2018 | WO | 2018152342 | A1 | 23 August 2018 |

Form PCT/ISA/210 (patent family annex) (January 2015)

**REFERENCES CITED IN THE DESCRIPTION**

**Patent documents cited in the description**

- CN 201811027795X